(19) **Europäisches Patentamt / European Patent Office / Office européen des brevets**

(11) **EP 4 776 559 A1**

(12) **EUROPEAN PATENT APPLICATION**

(43) Date of publication:
**15.07.2026 Bulletin 2026/29**

(21) Application number: **25315008.0**

(22) Date of filing: **09.01.2025**

(51) International Patent Classification (IPC):
*H04L 9/00* (2022.01)   *H04L 9/30* (2006.01)

(52) Cooperative Patent Classification (CPC):
**H04L 9/008; H04L 9/3093**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Zama SAS**
**75002 Paris (FR)**

(72) Inventors:
- **Bergerat, Loris**
  **75002 Paris (FR)**
- **Orfila, Jean-Baptiste Guillaume Noël**
  **75002 Paris (FR)**

(74) Representative: **DeltaPatents B.V.**
**Fellenoord 370**
**5611 ZL Eindhoven (NL)**

(54) **CRYPTOGRAPHIC METHOD AND DEVICE FOR COMPUTING A BLIND ROTATION MODULO A CYCLOTOMIC POLYNOMIAL**

(57)    Some embodiments are directed to a computer-implemented, cryptographic method (600) for computing a blind rotation modulo. The method includes obtaining a target polynomial to be rotated, partitioning (620) a sequence of integers into values zero modulo an integer $\mu$, and values non-zero modulo $\mu$, processing the blind rotation for a part of the partition corresponding to the values non-zero modulo $\mu$, splitting (640) the target polynomial into multiple part polynomials having monomials with exponents zero modulo the integer $\mu$, and exponents non-zero modulo $\mu$, processing (650) the blind rotation for parts of the partition corresponding to the values zero modulo $\mu$, wherein the processing iteratively updates the multiple part polynomials, skipping the part polynomials corresponding to monomials having exponents in non-zero equivalency classes.

200

*Fig. 2*

## Description

### TECHNICAL FIELD

The presently disclosed subject matter relates to cryptographic method for computing a blind rotation modulo a cyclotomic polynomial in a fully homomorphic computation scheme, a system configured for computing a blind rotation modulo a cyclotomic polynomial in a fully homomorphic computation scheme, and a computer readable medium.

### BACKGROUND

Homomorphic cryptography allows one to perform computations, e.g., evaluate circuits over encrypted data without being able to decrypt. For example, input data and computation results may be received and returned in encrypted form. Intermediate data, e.g., an internal state of the computation, may also be in encrypted form.

Even though the result of the computation is returned in an encrypted form, when decrypted the output is the same as if the operations had been performed on the unencrypted data. Homomorphic encryption can be used for privacy-preserving outsourced storage and computation. This allows data to be encrypted and outsourced to a cloud environment for processing and/or storage, all while encrypted.

For example, homomorphic cryptography may be applied in fields such as health care in which privacy regulations may make it difficult to share plain data, but computations on encrypted medical data may be allowable. For example, a medical model developed, say, to classify medical data may be configured to receive medical data from a third party, say, a hospital, in encrypted form. The medical model might, e.g., classify medical data, e.g., as normal or abnormal, or as having some particular medical syndrome, disease, or other disorder. Using homomorphic encryption, the medical model may be applied to medical data that is received in encrypted form. This means that the party that offers the medical model does not have access to the plain medical data that corresponds to the encrypted medical data. The user of the service can decrypt the result of the medical model application.

Various popular homomorphic encryption schemes employ noise. For example, encryption of a data item may comprise mapping the data item to a point in a key-dependent lattice, to which some noise is added.

When a data item has just been encrypted, the noise is low-the encryption is fresh. For example, the amount of noise is sufficiently low that if the data item were to be decrypted, the noise can be removed at some point in the decryption process, e.g., by rounding and the correct plain data is recovered. On the other hand, the noise should be high enough to make attacks on the system sufficiently hard. For example, in the hypothetical absence of noise, many homomorphic encryption schemes could be attacked with linear algebra, or other efficient algorithms, e.g., lattice-based algorithms. When a data item is encrypted, noise is added that is chosen so that attacks are hard while homomorphic operations can still be performed. Most homomorphic operations increase the noise that is inherent in a homomorphically encrypted data item. When many such operations are performed, the noise may reach a level where unique decryption is no longer possible. At that point, the scheme breaks down.

Generally speaking, two approaches have been developed in the art to deal with this phenomenon. The first is levelled homomorphic encryption. A levelled homomorphic encryption can perform some number of operations one after the other. The levelled homomorphic encryption is designed such that the expected or worst-case noise at the end of such a number of operations is below a bound needed for exact decryption, or in any case causes only limited deviation to the decrypted plaintext. Thus, there is a limit to the number of operations that can be performed.

Another approach is so-called bootstrapping operations. A bootstrap operation is possible if the homomorphic encryption is strong enough to evaluate homomorphically the decryption algorithm in the encrypted domain-sometimes called a bootstrappable homomorphic encryption. A levelled homomorphic encryption scheme may be converted to an unlevelled homomorphic encryption scheme by performing bootstrap operations. The bootstrapping operation reduces noise in an encrypted data item. By means of a bootstrapping operation, noise in a ciphertext can be reduced to a fixed amount. A bootstrap operation increases the number of operations that can be performed on an encrypted data item or removes the limit altogether. Operations are performed and if the expected or worst-case noise in a ciphertext gets close to the level where unique decryption is no longer possible, bootstrapping is used to reduce the noise. Bootstrapping is typically computationally expensive; so it is advantageous to improve this algorithm.

A conventional algorithm for bootstrapping is disclosed in "Programmable Bootstrapping Enables Efficient Homomorphic Inference of Deep Neural Networks" by I. Chillotti et al. (incorporated herein by reference and available at https://doi.org/10.1007/978-3-030-78086-9_1). Note that the bootstrapping requires a large number of bootstrapping keys-auxiliary public key material that allows a homomorphic computation method or device to perform the bootstrapping. Furthermore, the distribution of secret key digits, is severely restricted in the known system.

**EP 4 776 559 A1**

## SUMMARY

It would be advantageous to have an improved blind rotation, e.g., as used in bootstrapping algorithm.

In an embodiment, a computer-implemented, cryptographic method is provided for computing a blind rotation modulo a cyclotomic polynomial $\Phi_\alpha$ in a fully homomorphic computation scheme.

The extent of the rotation may be defined by a sequence of integers, in that a target polynomial is to be rotated over a dot product of the sequence and a secret key. Typically, this is a binary secret key, e.g., having binary digits, though this is not necessary.

The method may comprise partitioning the sequence of integers into values zero modulo an integer $\mu$ and values non-zero modulo $\mu$. In an embodiment, this partitioning may be more refined, e.g., into sets according to a divisibility level of an integer in the sequence, wherein a divisibility level of an integer is the largest exponent of $\mu$ that divides the integer.

The blind rotation may first be performed for a part of the partition corresponding to the values non-zero modulo $\mu$. Here, the processing may update the target polynomial for each value in the part.

The blind rotation may then be performed for parts of the partition corresponding to the values zero modulo $\mu$. Interestingly, the processing is now performed only on the part of the target polynomial corresponding to monomials having exponents in a zero equivalency class; skipping the part of the target polynomial corresponding to monomials having exponents in a non-zero equivalency class.

By skipping a part of the target polynomial processing is faster. Interestingly, the constant term is unaffected by this skipping. For example, if the blind rotation method is used in a bootstrapping algorithm, the constant term may be extracted after the blind rotation is complete, giving the correct result.

In an embodiment, efficiency is further improved by modifying a modulus switching operation by increasing the number of integers in the sequence that are zero modulo $\mu$.

In an embodiment, the method for FHE blind rotation, in particular a bootstrapping and/or programmable bootstrapping algorithm incorporating said blind rotation may advantageously be used in a method or system for performing a computation using fully homomorphic encryption (FHE) cryptography.

For example, such a method or system is useful to allow private outsourcing of computations. A data provider may want to outsource computations, e.g., to an FHE computation system. There may be various reasons for this. For example, the data provider may lack sufficient resources for the computation. For example, the data provider may not have access to proprietary data or software; in particular, the data provider may not have access to proprietary trained machine-learning models, such as neural networks.

To do this, the data-provider may provide one or more encrypted data items for a computation. The one or more encrypted data items are encrypted with an encryption key of the data-provider device.

The FHE computation system then performs the computation, in the form of a set of FHE operations on the encrypted data items, while the data remains encrypted during the computation. FHE encrypted result data items may then be stored or returned. For example, the data provider device may decrypt the result data items to obtain the result of the computation.

By using the improved blind rotation method, the FHE computation system may perform the computation faster. The FHE computation system may also perform the computation to a higher accuracy, which increases security, yet without increasing the required computation time. In an embodiment, the blind rotation in the FHE computation is performed at least in part in parallel. In particular, in at least part of the parallel computation, threads are freed up because of reduced need for computation, e.g., skipping of parts of the target polynomial.

In an embodiment, the blind rotation is used to homomorphically evaluate a neural network on one or more FHE encrypted data items. In particular, programmable bootstrapping in the neural network evaluation may comprise an embodiment of the blind rotation. The FHE encrypted data items may represent an image, a video, an audio fragment, etc. The neural network may comprise an image, video, or audio classifier, or an image, video, or audio generator.

An FHE computation system is an electronic device, e.g., a computer.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer-readable medium for performing an embodiment of the method when said program product is executed on a computer. For example, a computer readable medium may be a computer readable storage medium.

In an embodiment, the computer program comprises computer program code adapted to perform all or part of the steps of an embodiment of the method when the computer program is run on a computer. Preferably, the computer program is embodied on a computer-readable medium.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a homomorphic computation system,
Figure 1b schematically shows an example of an embodiment of a homomorphic computation system,
Figure 2 schematically shows an example of an embodiment of a homomorphic computation system,
Figure 3 schematically shows an example of an embodiment of a blind rotation in a homomorphic computation system,
Figure 4 schematically shows an example of an embodiment of a blind rotation in a homomorphic computation system,
Figure 5 schematically shows an example of an embodiment of a method for computing a blind rotation,
Figure 6a schematically shows a computer-readable medium having a writable part comprising a computer program according to an embodiment,
Figure 6b schematically shows a representation of a processor system according to an embodiment.

## Reference signs list

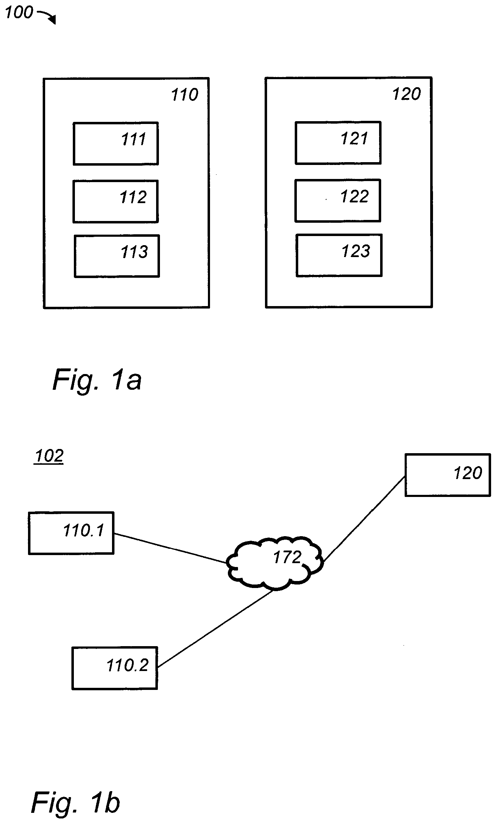

The following list of references and abbreviations corresponds to figures 1a-5, 6a, and 6b, and is provided for facilitating the interpretation of the drawings and shall not be construed as limiting the claims.

| | |
|---|---|
| 100, 102 | a homomorphic computation system |
| 110, 110.1, 110.2 | a data-provider device |
| 120 | a homomorphic computation device |
| 111, 121 | a processor system |
| 112, 122 | a storage |
| 113, 123 | a communication interface |
| 172 | a computer network |
| 200 | homomorphic computation device |
| 261 | a homomorphically encrypted value |
| 260 | a modulus switching unit |
| 211 | a sequence of integers |
| 210 | a partitioning unit |
| 220 | multiple parts |
| 221-223 | a partition of the sequence of integers |
| 271 | a test polynomial |
| 270 | target polynomial preparing unit |
| 216 | a target polynomial to be rotated |
| 215 | a splitting unit |
| 230 | multiple part polynomials |
| 231-234 | a part polynomial |
| 250 | a processing unit |
| 255 | a sample extraction unit |
| 251 | an encrypted output value |
| 300 | a blind rotation |
| 301, 305, 307, 309, 311 | a bootstrapping key |
| 303, 304 | intermediate target polynomial |
| 302, 306, 308, 310, 312 | a homomorphic multiplexer gate |
| 500 | a blind rotation |
| 501, 514, 519, 522, 525 | a bootstrapping key |
| 503, 504, 506, 507, 509, 510, 512, 513 | intermediate target polynomial |
| 502, 515, 520, 523, 526, 505, 516, 508 517, 521, 524, 511, 518 | a homomorphic multiplexer gate |

| 530 | a first phase |
| 540 | a second phase |
| 550 | a third phase |

| 1000, 1001 | a computer-readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible to embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only but also includes every other combination of features described herein or recited in mutually different dependent claims.

Fully Homomorphic Encryption is a family of encryption schemes allowing performing computation over encrypted data. FHE schemes use noisy ciphertexts for security reasons, i.e., ciphertexts contain some randomness. This noise grows after every performed homomorphic operation, and, if not controlled, it can compromise the message and prevent the user from decrypting correctly. A technique called Bootstrapping (from (Gentry 2009)) allows reducing the noise when it has grown, by mean of a public key called bootstrapping key. By using bootstrapping frequently, thus reducing noise when needed, one can perform as many homomorphic operations as needed, but it remains an expensive technique, both in terms of execution time and memory usage.

TFHE

The scheme TFHE (Chillotti et al. 2016, 2017) differentiates from the other FHE schemes thanks to its supports of a very efficient bootstrapping technique. TFHE was originally proposed as an improvement of the scheme FHEW (Ducas and Micciancio 2015), a GSW (Gentry, Sahai, and Waters 2013) based construction proposing a fast bootstrapping for the evaluation of Boolean gates. Apart from improving the FHEW bootstrapping, TFHE implements also additional techniques in order to support more functionalities than the ones proposed by FHEW and to improve homomorphic evaluation of complex circuits.

For example, TFHE ((Chillotti et al. 2016, 2017, 2020; Carpov, Izabachène, and Mollimard 2019)) included the following set of algorithms:

    key generation: secret and public key generation
    public and private key switching key generation
    bootstrapping key generation
    GLWE encryption
    GGSW encryption
    GLWE decryption
    GGSW decryption
    homomorphic addition: GLWE and GGSW
    addition with a constant: GLWE and GGSW
    multiplication with a constant: GLWE and GGSW
    GLWE external product
    GGSW internal product
    CMux
    Rotation

blind rotation
key switching
functional/private/public key switching
modulus switching
bootstrapping
programmable bootstrapping
circuit bootstrapping
gate bootstrapping
multi-value bootstrapping
vertical packing
sample extraction
horizontal packing

For example, FHEW ((Ducas and Micciancio 2015, 2017)) includes the following set of algorithms:

key generation: secret and public key generation
key switching key generation
bootstrapping key generation
LWE encryption
RGSW encryption
LWE decryption
RGSW decryption
homomorphic addition: LWE and RGSW
addition with a constant: LWE and RGSW
multiplication with a constant: LWE and RGSW
RLWE external product
RGSW internal product
homomorphic accumulator initialization
homomorphic accumulator incrementation
key switching
modulus switching
MSB Extraction
bootstrapping
Other FHE schemes may include more or fewer algorithms.

**TFHE-like Scheme**

The term "TFHE-like schemes" refers to fully homomorphic encryption schemes that include a homomorphic multiplexor gate, an external homomorphic multiplication, and homomorphic addition. These primitives may be used to implement a blind rotation, and in turn a bootstrapping or programmable bootstrapping algorithm. A bootstrapping algorithm is configured to take as input a ciphertext and output a ciphertext of the same message with reduced noise. During this process, the algorithm evaluates the homomorphic decryption of the input ciphertext in the exponent of a polynomial.

Fully homomorphic encryption (FHE) is a family of encryption schemes that, in theory, permits an unlimited number of operations to be performed on encrypted data without decrypting the ciphertexts. With FHE, sensitive data can be processed and analyzed without exposing user privacy. Due to the possibilities it offers, over the last decade many domains such as cloud computing, data analysis, smart contract evaluations and machine learning have shown significant interest in FHE.

Nowadays, most FHE schemes, such as CKKS (Cheon et al. 2017), BGV (Brakerski, Gentry, and Vaikuntanathan 2012), BFV (Fan and Vercauteren 2012; Brakerski 2012), FHEW (Ducas and Micciancio 2015) and TFHE (Chillotti, Gama, et al. 2020), are based on the hardness of the Learning With Errors (LWE) (Regev 2005) assumption and its variants, the Ring LWE (RLWE) (Stehlé et al. 2009; Lyubashevsky, Peikert, and Regev 2010) assumption, and the Generalized LWE (GLWE) (Brakerski, Gentry, and Vaikuntanathan 2012; Langlois and Stehlé 2015) assumption. Their security then relies on a small randomness term, called error or noise, which is added to each ciphertext. Because of this, performing operations between two ciphertexts leads to noise growth. After a certain number of operations, the accumulated noise can corrupt the message. In 2009, Gentry (Gentry 2009) proposed a method called bootstrapping to homomorphically reduce the noise in ciphertexts. This gives the possibility to control the noise growth throughout the computation.

In TFHE, the goal of bootstrapping is to reduce noise by homomorphically computing the decryption (this reveal no information of the message) of the input ciphertext to produce a less noisy ciphertext. The TFHE decryption is performed by computing a linear operation followed by a rounding operation. To achieve the bootstrapping, both the linear part and the rounding operation of the decryption must be computed while keeping everything encrypted. The linear part of the decryption is executed through a blind rotation, i.e., a rotation of a GLWE ciphertext where the rotation is unknown to the server, while the rounding operation is represented in a lookup table that redundantly encrypts, in the GLWE ciphertext, all the different messages. During the creation of the lookup table, any function can be applied to any message, allowing, during the bootstrapping, the evaluation of a univariate function in addition to reducing the noise. This is why the TFHE bootstrapping is referred to as programmable or functional bootstrapping (PBS).

The efficiency of the TFHE bootstrapping is directly linked to the size of the polynomials being evaluated during the blind rotation. Moreover, the size of the polynomials used during this operation is directly linked to the message precision, correctness and the failure probability. Due to these constraints, TFHE is particularly efficient for small precisions (up to 5 bits), offering a bootstrapping faster than 50ms. Due to this low latency, the TFHE bootstrapping forms the core of many homomorphic computations. In contrast, the other schemes aim to avoid bootstrapping as much as possible to maintain acceptable latency when homomorphically evaluating a circuit. Bootstrapping relies on complex cryptographic parameter sets, that must ensure security, correctness and efficiency.

During the last decade, significant work has been done to improve various bootstrapping algorithms and determine the best parameter sets. For instance, works such as (C. Lee et al. 2023) and (Bergerat et al. 2023) propose new security assumptions regarding the secret keys, offering algorithms with improved latency. Other works, such as (Hong et al. 2024), suggest directly removing some external products (i.e., products between a GLWE ciphertext and a GGSW ciphertext) when the rotation value in the blind rotation is below a specified threshold, with almost no impact on correctness. For higher precision, TFHE becomes less efficient, and the bootstrapping becomes slower until it becomes impractical. For these unreachable precisions, some methods have been proposed (Guimarães, Borin, and Aranha 2021; Liu, Micciancio, and Polyakov 2022; Bergerat et al. 2022), which become more efficient for bootstrapping with precision greater than 8 bits. Additionally, to reduce the latency of bootstrapping algorithms, papers such as (Bourse et al. 2018; Z. Li et al. 2024; Zhou et al. 2018; Joye and Paillier 2022; K. H. Lee and Yoon 2023) have focused on parallelizing specific parts of the bootstrapping and have proposed several new efficient algorithms. All of these approaches reduce the latency of the bootstrapping without altering the core concept of the blind rotation. Other work, such as (Y. Lee et al. 2023), proposes modifying the core part of the blind rotation by evaluating automorphisms rather than rotating polynomials.. Despite these advancements, the bootstrapping operation remains a significant bottleneck in terms of computational time when evaluating a homomorphic program.

Currently, the smallest latency for a bootstrapping with medium precision (ranging from 5 to 8 bits) is achieved by the variant proposed by (K. H. Lee and Yoon 2023). In the bootstrapping method of (K. H. Lee and Yoon 2023), the idea remains the same, however, instead of rotating a large polynomial lookup table, they split it in several smaller polynomials, and the blind rotation is computed over these smaller polynomials leading to more computations but with lower individual costs. This technique is particularly effective in a sequential context when the parameters reach the noise plateau described in (Bergerat et al. 2023).

The noise plateau is a threshold in the size of a ciphertext beyond which noise can no longer be reduced without compromising security. At a high level, increasing the size of a ciphertext allows to decrease the noise variance while maintaining the same level of security. However, when working with discretized values, noise variance cannot be reduced below a certain limit without compromising security. This minimum noise variance is studied in (Gentry, Halevi, and Smart 2012; Micciancio and Regev 2009). For algorithmic reasons, ciphertexts larger than the noise plateau are sometimes required and since noise cannot be further reduced, these ciphertexts end up with an unnecessarily high level of security.

Recently, (B. Li and Micciancio 2021) presented a new type of attack on approximate FHE schemes. Afterwards, in (Cheon et al. 2024; Checri et al. 2024), this type of attack was generalized to exact FHE schemes such as TFHE. Even if an FHE scheme is called exact, an error may still occur during computation with some probability. This error is due to the noise distribution which usually follows a Gaussian distribution. There is a very small probability that the noise distribution becomes too large, compromising the message. This probability can be more or less significant and can be fixed in the same manner as security, i.e., through the selection of cryptographic parameters.

The new attack occurs when an error happens during some specific algorithms. Indeed, if an oracle indicate whether the computed result is correct or not, it becomes possible to retrieve certain secret key information. In an embodiment, an FHE schemes has a reduced failure probability to ensure security. This yields an enlargement of the lattice dimension, leading to a slowdown. By using the improved bootstrapping this slowdown can be, at least in part, be avoided, thus obtaining higher security.

**Figure 1a** schematically shows an example of an embodiment of a data-provider device 110 and of an embodiment of a homomorphic computation device 120, e.g., an FHE computation system.

Data-provider device 110 and homomorphic computation device 120 may be part of a homomorphic computation system 100.

Homomorphic computation device 120 is configured to perform homomorphic computations, e.g., as outsourced to homomorphic computation device 120 by data-provider device 110. Data-provider device 110 is configured to initiate a homomorphic computation at homomorphic computation device 120. For example, data-provider device 110 may encrypt one or more input data and prepare auxiliary key material, e.g., bootstrapping keys, and send encrypted data and auxiliary key material to homomorphic computation device 120. Received encrypted data and auxiliary key material may be used by a receiver to perform several homomorphic computations; these homomorphic computations typically involve bootstrappings or programmable bootstrappings using the auxiliary key material. The final encrypted result is then returned and/or stored.

Homomorphic computation system 100 is configured to perform homomorphic operations on encrypted data. Homomorphic encryption is a cryptographic method that allows mathematical operations to be performed on encrypted data without decrypting it, that is, without requiring access to the underlying plaintext. This means that computations like addition and multiplication can be carried out on ciphertexts, generating an encrypted result that, when decrypted, corresponds exactly to the result of those operations as if they had been performed on the original, unencrypted data. This property preserves the confidentiality of the data throughout processing, enabling secure computation on sensitive information by untrusted parties, such as cloud servers, without exposing the underlying plaintext. Homomorphic encryption is especially valuable for privacy-preserving applications, where secure data analysis and processing are required without compromising data integrity.

For example, homomorphic computation device 120 is designed to receive one or more packed ciphertexts that each encrypt multiple plaintexts, e.g., from data-provider device 110, and perform computations on the received encrypted plaintexts. Typically, the results are returned to data-provider device 110.

These encrypted plaintexts are typically lattice-based and may comprise noise. In particular, the encrypted plaintexts may be based on the Learning With Errors (LWE) problem or the Ring Learning With Errors (RLWE) problem, both generalizing to the General Learning With Errors (GLWE) problem. The packed ciphertext may comprise multiple elements, which may be taken from some ring, e.g., an integer or polynomial ring. The encrypted plaintexts may also be based on the Learning with Rounding (LWR) problem. The system may perform homomorphic operations on encrypted plaintexts, operating on multiple plaintexts simultaneously.

Data-provider device 110 is configured to encrypt plaintext data into one or more encrypted plaintexts and send them to homomorphic computation device 120. Data-provider device 110 may also generate and send auxiliary key material that homomorphic computation device 120 uses to perform homomorphic operations on the encrypted plaintexts, e.g., bootstrapping keys, key switching keys, and the like. Data-provider device 110 is configured to receive encrypted results from computation system 100 and decrypt the results.

Homomorphic computation device 120 is configured to perform various homomorphic operations on encrypted plaintexts. The encrypted plaintexts may be directly obtained from data-provider device 110, or they may be the result of previous homomorphic operations, e.g., the encrypted plaintexts may be intermediate results.

In an embodiment, homomorphic encryption is used by a data-provider device to securely offload or outsource computational tasks to a server, e.g., a homomorphic computation device, without compromising the privacy of the underlying data. For example, data-provider device 110 encrypts one or more input data and transfers the resulting ciphertext, e.g., the encrypted plaintexts, to the server. Homomorphic computation device 120 then performs computations on the encrypted data, producing encrypted results that data-provider device 110 can decrypt locally. This setup eliminates the need for high-performance computing hardware on the client side, as the computation can be executed on a more capable server. Furthermore, homomorphic encryption allows multiple data-provider devices to securely pool encrypted data for joint computation tasks, such as training machine learning models. For example, this approach is useful for collaborative learning, where different entities wish to jointly train a neural network model without sharing sensitive data in plaintext.

In another application, homomorphic computation device 120 can homomorphically evaluate a machine learning model, such as a neural network, on encrypted data provided by one or more data-provider devices. This setup allows data-provider devices to benefit from AI models without exposing their raw data to the server. For instance, in medical data analysis, data-provider devices can send encrypted data to the server, which then applies a machine learning model to this data in its encrypted form. The result, still encrypted, is returned to the data-provider device for decryption, enabling insights without privacy compromise. For example, homomorphic computation device 120 may receive encrypted data, e.g., encrypted plaintexts, homomorphically evaluate a neural network on the received encrypted data, and obtain encrypted results. The encrypted results may then be sent to data-provider device 110.

Data-provider device 110 may comprise a processor system 111, a storage 112, and a communication interface 113. Homomorphic computation device 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Data-provider device 110 and homomorphic computation device 120 are represented here as single devices, though either one, or both, could just as well be implemented as systems, e.g., a geographically distributed system, e.g., a cloud computing system, e.g., a system comprising multiple computers.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power, such as a volatile memory device, e.g., Random Access Memory (RAM). For example, storage 112 and/or 122 may store data in the presence of power as well as outside the presence of power, such as a non-volatile memory device, e.g., Flash memory. Storage may comprise a volatile writable part, say a RAM, and/or a non-volatile writable part, e.g., Flash. Storage may comprise a non-volatile non-writable part, e.g., ROM, e.g., storing part of the software.

Devices 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. Devices 110 and 120 may comprise a connection interface which is arranged to communicate within homomorphic computation system 100 or outside of homomorphic computation system 100 as needed. For example, the connection interface may comprise a connector, e.g., a wired connector, e.g., an Ethernet connector, an optical connector, etc., or a wireless connector, e.g., an antenna, e.g., a Wi-Fi, 4G, or 5G antenna.

Communication interface 113 may be used to send or receive digital data, e.g., encrypted data packets, bootstrapping keys, key switching keys, requests for computations, and encrypted computation results. Communication interface 123 may be used to send or receive digital data, e.g., encrypted input data, computation instructions, intermediate computation results, and final encrypted outputs for decryption by the data-provider device.

Data-provider device 110 and homomorphic computation device 120 may have a user interface, which may include well-known elements such as one or more buttons, a keyboard, a display, a touch screen, etc. The user interface may be arranged for accommodating user interaction for performing functions such as data encryption, initiating homomorphic computations, setting computation parameters, accessing and managing storage, viewing computation results, configuring security settings, etc.

The execution of devices 110 and 120 may be implemented in a processor system. Devices 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, data-provider device 110 and homomorphic computation device 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, devices 110 and 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, data-provider device 110 and homomorphic computation device 120 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device.

**Figure 1b** schematically shows an example of an embodiment of a homomorphic computation system 102. System 102 may comprise multiple data-provider devices; shown are data-provider devices 110.1 and 110.2. Homomorphic computation system 100 may comprise multiple homomorphic computation devices, although only one is shown: homomorphic computation device 120. The devices are connected through a computer network 172, e.g., the Internet. Data-provider device 110 and homomorphic computation device 120 may be according to an embodiment.

Homomorphic computation system 102 enables multiple data-provider devices, such as data-provider devices 110.1 and 110.2, to interact with a homomorphic computation device 120 over a computer network 172, such as the Internet, e.g., to outsource computation work.

Each data-provider device encrypts its data locally and sends the encrypted data, along with any necessary auxiliary key material, to homomorphic computation device 120. The homomorphic computation device then performs homomorphic computations on the encrypted data, processing inputs from one or multiple data-provider devices without

**EP 4 776 559 A1**

ever decrypting them, thus preserving data privacy throughout the operation.

Once the computations are complete, homomorphic computation device 120 may send the encrypted results back to each respective data-provider device for decryption and local interpretation. This setup is valuable for secure, distributed data analysis across entities, such as hospitals analyzing patient data jointly or other institutions working on sensitive data.

Homomorphic computation system 102 may support joint computations on encrypted data. For example, multiple data-provider devices, e.g., data-provider devices 110.1 and 110.2, may each send encrypted data to homomorphic computation device 120 to perform a computation on the combined data obtained from the multiple data-provider devices, even while in its encrypted state. The encrypted result from the joint computation may be returned to one, part, or all of the multiple data-provider devices.

An embodiment comprises performing computations using fully homomorphic encryption (FHE). First, one or more encrypted data items are received from a data-provider device. These data items are encrypted using an encryption key specific to the data-provider device. After receipt, the encrypted data undergoes a series of homomorphic operations to implement the required computation. This produces encrypted result data, which can either be stored for subsequent processing or transmitted to another device for further computations. Throughout this process, the data remains encrypted, ensuring that its confidentiality is preserved.

To implement such a method, a homomorphic computation system may comprise two components: a data-provider device and a homomorphic computation device. The data-provider device is responsible for encrypting the input data using FHE encryption keys and preparing auxiliary key materials such as bootstrapping keys or key-switching keys. Once encrypted, the data and key material are sent to the homomorphic computation device, which is configured to perform operations directly on the encrypted inputs. The operations can include basic arithmetic, such as addition and multiplication, or more complex processes like polynomial evaluations, machine learning models, e.g., neural networks, and many others. The results of these computations remain in encrypted form and can either be stored locally or forwarded for further processing.

For instance, in a medical application, patient health metrics can be encrypted on a data-provider device, such as a hospital server, and sent to a cloud-based homomorphic computation device for secure processing. The computations, such as predicting the likelihood of a condition using statistical models, are performed without exposing the sensitive data. The encrypted results are returned to the hospital for decryption and interpretation.

An embodiment comprises neural network evaluation. Using FHE, a neural network model can process encrypted inputs, such as images, videos, or audio fragments, and produce encrypted outputs. For example, the neural network may classify or generate data in its encrypted form without ever accessing the plaintext. For example, an encrypted medical image, such as an X-ray, can be processed by a convolutional neural network running on the homomorphic computation device to detect abnormalities. The output, still encrypted, is sent back to the data-provider for decryption, preserving the privacy of the image throughout the analysis.

The neural network may act as a classifier or a generator depending on the application. A classifier might categorize encrypted inputs into distinct groups, such as determining whether encrypted satellite images indicate the presence of specific land features.

The encrypted data provided by the data-provider device can span various modalities, including images, videos, and audio. For instance, encrypted CT scans may be analyzed for anomalies, encrypted surveillance footage may be processed for motion detection, or encrypted audio fragments may undergo sentiment analysis. Such applications demonstrate the versatility and security of FHE in enabling computations on sensitive data without exposing the plaintext, making it especially valuable in privacy-critical domains like healthcare, finance, and collaborative machine learning. Alternatively, a generator could produce encrypted synthetic outputs, such as creating encrypted video frames from encrypted raw inputs.

For example, encrypted video frames captured by drones might be processed by a generative adversarial network (GAN) operating on the homomorphic computation device to reconstruct missing segments or enhance low-quality footage. Similarly, encrypted financial data may be used to generate encrypted synthetic datasets for use in collaborative analytics while preserving confidentiality.

It is important to note that the model used in homomorphic computations does not need to be a neural network. Simpler models, such as linear regression, decision trees, or logistic regression, can also operate on encrypted data and may similarly require bootstrapping or programmable bootstrapping to handle computational depth or maintain accuracy. For example, encrypted medical data could be analyzed using a non-neural network model, e.g., logistic regression, to detect the likelihood of a specific condition. Similarly, encrypted sensor data from a manufacturing process could be used as the input to a machine control algorithm to control a machine, or to an anomaly detection algorithm. The machine control algorithm or anomaly detection algorithm may use a neural network but may also not use a neural network.

An embodiment comprises performing computations using fully homomorphic encryption (FHE) for distributed ledgers, e.g., a blockchain. For example, values on which a homomorphic computation is to be performed may be stored on a distributed ledger. The homomorphic computation may be encoded in a smart contract. The smart contract is typically also stored on the distributed ledger, e.g., in whole or in part. Typical examples of distributed ledgers include Ethereum, Solana, and the like, e.g., other distributed ledgers supporting the storing of encrypted values and of smart contracts, or storing smart contracts at least in part.

For example, one or more homomorphically encrypted values may be obtained, and a smart contract may be homomorphically evaluated. This evaluation includes a homomorphic computation applied at least to the one or more homomorphically encrypted value(s) that were obtained. The obtained homomorphically encrypted values may be retrieved from the distributed ledger, but other possibilities exist. For example, instead of actually storing a homomorphically encrypted value on the distributed ledger, the ledger may instead store an identifier that identifies the homomorphically encrypted values. The homomorphically encrypted value may then, e.g., be retrieved from an external storage, e.g., external to the distributed ledger, that associates identifiers to homomorphically encrypted values. These encrypted values may be encrypted using an encryption key specific to the particular user.

For example, after obtaining the one or more homomorphically encrypted values, the encrypted data may undergo a series of homomorphic operations to implement a computation specified in the smart contract. This produces a homomorphically encrypted result value. Throughout this process, the data remains encrypted, ensuring that its confidentiality is preserved.

After the homomorphic computation is complete, the resulting homomorphically encrypted result value may be stored on the distributed ledger. The latter is not necessary, and instead, the homomorphically encrypted result value may be returned to a user. Yet another possibility is to store the homomorphically encrypted result value in the abovementioned external storage. In any case, an owner of the encryption key may decrypt the resulting homomorphically encrypted result value. The owner may be a user but may also be a computation service, e.g., an oracle or the like.

In an embodiment, a homomorphic method may comprise obtaining a homomorphically encrypted value, homomorphically evaluating the smart contract, including applying a homomorphic computation at least to the retrieved homomorphically encrypted value. Optionally, the method may further comprise decrypting a resulting homomorphically encrypted result, e.g., with a decryption key associated with the retrieved homomorphically encrypted value.

To implement such a method, the distributed ledger systems may comprise validators, e.g., miners, configured to maintain the integrity of the ledger. For example, the validators may validate and append transactions or smart contract executions to the distributed ledger, e.g., blockchain. When homomorphic computations are included in smart contracts, validators may ensure that the state transitions resulting from these computations are correctly executed. Post-merge, validators ensure consensus on the execution of such computations following consensus rules of the distributed ledger, e.g., proof of stake, proof of work, etc.

Validators, e.g., miners, may verify homomorphic computations and/or cryptographic proofs, e.g., zero-knowledge proofs, that can be generated during or after homomorphic computations to validate the correctness of the computations without revealing the underlying data.

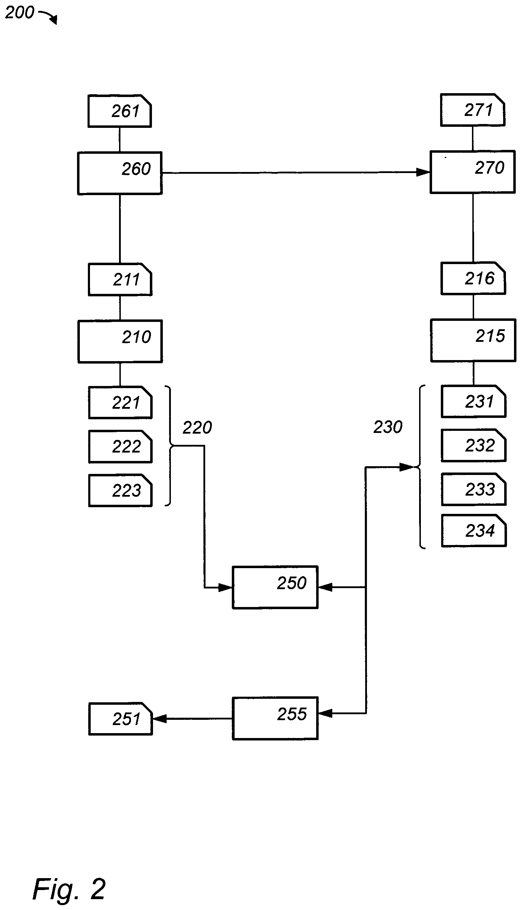

**Figure 2** schematically shows an example of an embodiment of computation homomorphic computation system 200. For example, homomorphic computation system 200 may be used to perform calculations on encrypted data, e.g., computations that were outsourced to homomorphic computation system 200, e.g., by a data provider. For example, homomorphic computation system 200 may be implemented on a homomorphic computation device 120.

In particular, homomorphic computation system 200 is configured for a programmable bootstrap operation. In addition, homomorphic computation system 200 is configured for further operations. In particular, homomorphic computation system 200 is assumed to support homomorphic addition. It is noted that the combination of a programmable bootstrap and homomorphic addition is sufficient to perform any computation homomorphically.

An advantageous way to implement a programmable bootstrapping is to perform a blind rotation, e.g., a homomorphic rotation, of a polynomial that represents a lookup table of a function. The latter polynomial is sometimes referred to as a test polynomial. It is noted that, although bootstrapping is a particularly important application of blind rotation, the operation is important in its own right as a homomorphic operation supported by homomorphic computation system 200. In an embodiment, the function is not the identity function, e.g., a non-identity function.

Given a programmable bootstrapping, e.g., a bootstrapping which implements a function application, a bootstrapping for noise reduction only, could be implemented by performing a programmable bootstrapping configured for the identity function.

Homomorphic computation system 200 is configured for computing a blind rotation modulo a cyclotomic polynomial $\Phi_\alpha$ in a fully homomorphic computation scheme. Any cyclotomic polynomial $\Phi_\alpha$ may be chosen for the embodiment.

In an embodiment, $\alpha$ is a power of 2, that is the cyclotomic polynomial $\Phi_{2^k}$, which corresponds to the polynomial $\Phi_{2^k} = x^{2^{k-1}} + 1$. These cyclotomic polynomials are advantageous as modular arithmetic is simplified modulo this polynomial. There is however, no requirement when applying the fully homomorphic scheme in general or the blind rotation method described herein in particular to use this particular class of cyclotomic polynomials.

The ability to perform a blind rotation modulo any cyclotomic polynomial may be advantageous. The size and thus speed of an FHE scheme depends a lot on the size of the cyclotomic polynomial. Allowing more cyclotomic polynomials offers a wider range of choices for the dimension of the underlying ring, enabling fine-tuned trade-offs between security and efficiency. In some cases, a cyclotomic polynomial of lower degree could provide sufficient properties for the operation, leading to less computational overhead. Furthermore, allowing other cyclotomic polynomial enables non-power-of-two ring sizes. In an embodiment, the blind rotation is modulo a cyclotomic polynomial $\Phi_{2k}$; In an embodiment, the blind rotation is modulo a cyclotomic polynomial $\Phi_n$, wherein $n$ is not a power of 2.

Shown in Figure 2 is an algorithm for blind rotation, in this case applied to programmable bootstrapping. In particular, Figure 2 shows a target polynomial 216 that is to be rotated, and a sequence of integers 211. The inner product of sequence of integers 211 and a secret key defines the amount of rotation that needs to be applied to target polynomial 216.

In this example, target polynomial 216 and sequence of integers 211 are obtained from a bootstrapping application but as noted this is not necessary. Shown in Figure 2 is a homomorphically encrypted value 261. Encrypted value 261 may comprise a sequence of values, known as a mask, and one value known as the body. The inner product of the mask and a secret key may be used to decrypt the body-note that the secret key is not known to system 200. In particular, homomorphically encrypted value 261 may be an LWE-encrypted value, or an LWE-type encrypted value.

A modulus switch may be applied to homomorphically encrypted value 261, e.g., by a modulus switch unit 260, to obtain the sequence of values 211. The values may be represented by integers and may be elements of a finite ring, e.g., the integers modulo a modulus. Modulo switching encrypted value 261 further produces a modulo-switched body, which is used to obtain the target polynomial 216. Modulo switching per se is a conventional operation in which the integers in homomorphically encrypted value 261 are multiplied by a modulo switching quotient and a rounding operation is performed.

In addition to encrypted value 261, a test polynomial 271 may also be obtained, e.g., received. Test polynomial 271 is an encrypted polynomial that encodes as a lookup table a noise reduction and/or a function. Test polynomial 271 may be referred to as LUT$_f$, e.g., a lookup table representing function $f$. Target polynomial 216 may be obtained from test polynomial 271 by multiplying it by $X^{\tilde{b}}$, wherein $\tilde{b}$ is the body obtained by the modulus switching of encrypted value 261. Obtaining the target polynomial 216 from a test polynomial may be done in a target polynomial preparing unit 270.

After the blind rotation, one of the coefficients of the target polynomial represents the lookup table applied to the value represented by modulus switched value 261. Typically, the relevant coefficient is the constant term of the target polynomial after blind rotation is complete. This is not necessary though, and other coefficients could be chosen to represent the result of the blind rotation. For simplicity, most embodiments assume that the constant term is used for this, but embodiments can be adapted if needed, e.g., by ensuring that only computations are performed that contribute to a particular desired coefficient.

To perform the blind rotation, the polynomial LUT$_f \cdot X^{\tilde{b}}$ needs to be multiplied with the unit monomials $X^{-s_0 a_0}$, $X^{-s_1 a_1}$, ..., $X^{-s_{n-1} a_{n-1}}$-which can be done using a homomorphic multiplexor gate. For example, for a given secret key bit $s_i$, one can compute $target(X) \cdot X^{-a_i}$, and select between $target(X)$ and $target(X) \cdot X^{-a_i}$ using a homomorphic multiplexor gate conditional on the secret bit $s_i$ as represented by the bootstrapping key corresponding to $s_i$. Herein $target(X)$ is the target polynomial processed so far.

Note that a monomial is considered a polynomial of the form $aX^b$, with $b$ an integer and $a$ and element of the underlying ring. A unit monomial is considered a polynomial of the form $X^b$, with $b$ an integer. Typically, for non-modular arithmetic exponent $b$ would be restricted to non-negative integers, but as the multiplications are modulo a cyclotomic polynomial, a monomial with a negative $b$ is well-defined.

Here, the inventors made to key observations. First, the particular order in which the multiplications with the unit monomials are performed is irrelevant for the end result. Second, depending on the order these multiplications are performed, some do not contribute to the final coefficient representing the blind rotation.

For example, taking $\alpha$ as a power of 2, that is the cyclotomic polynomial $\Phi_{2k} = x^{2k-1} + 1$, one could perform in a first phase those multiplications of the target polynomial with $X^{-s_0 a_0}$, $X^{-s_1 a_1}$, ..., $X^{-s_{n-1} a_{n-1}}$, in which $a_i$ is odd, followed in a second phase by the multiplications in which $a_i$ is even. In the second phase, interestingly, any monomial with an odd exponent in the target polynomial cannot contribute to the constant term anymore, since odd exponents will remain odd no matter how many terms with even exponents they are multiplied with. However, the constant term corresponds to a term with an even exponent (e.g., $c \cdot x^0$, wherein 0 is even). This means that in the second phase, all multiplications with odd-exponent monomials in the target polynomial can be skipped. This corresponds to a saving of approximately 25%. This works not only for binary secret keys, e.g., with $s_i$ being 0 or 1, or for ternary keys, e.g., with $s_i$ being 0, 1, or -1, but for any integer valued secret key. Indeed if one of integers $a_i = 0$ modulo some modulus, then we will have $a_i s_i = 0$ modulo the same modulus, regardless of the value of $s_i$. Note that for secret keys taking on more than two values, e.g., non-binary keys, a more multivalued homomorphic multiplexor gate and/or an increase in the number of bootstrapping keys may be used.

Interestingly, this approach can be extended to other cyclotomic polynomials, and to more phases. For example, continuing the above example, phase two may be arranged to do only multiplications in which $a_i$ is even, but not a multiple of 4, followed by a third phase in which only multiplications are done in which $a_i$ is multiple of $2^2 = 4$. In this way, the saving is increased from approximately 25% to approximately 31%, that is 5/16. The savings increase as more phases are added.

Accordingly, system 200 comprises a partitioning unit 210 configured to partition sequence of integers 211 into multiple parts 220. The multiple parts are subsets of sequence 211. The parts in multiple parts 220 do not overlap, and their union is sequence 211.

In an embodiment, the partition has two parts, e.g., a first part 221 comprising those values of sequence 211 which are non-zero modulo an integer $\mu$, and a second part 222 comprising those values of sequence 211 which are zero modulo the integer $\mu$. For example, if $\mu = 2$, then the first part may comprise the odd values, while the second part may comprise the even values.

In an embodiment, the partition has three parts-this is the configuration shown in Figure 2. For example, first part 221 may comprise those values of sequence 211 which are non-zero modulo integer $\mu$, second part 222 may comprise those values of sequence 211 which are zero modulo the integer $\mu$, but not zero modulo $\mu^2$, third part 223 may comprise those values which are zero modulo $\mu^2$. For example, if $\mu = 2$, then the first part may comprise the odd values, the second part may comprise the even values, which are not multiples of 4, and the third part may comprise the values, which are multiples of 4.

In general, partitioning unit 210 may be configured to partition sequence of integers 211 into multiple parts 220. The first part comprises the values of sequence 211 that are non-zero modulo $\mu$. Each next part comprises the values of sequence 211 that are zero modulo an increasing power of $\mu$, but are not zero modulo a next power of $\mu$. The last part contains values that are zero modulo a final power of $\mu$.

For example, a first part 1 comprises the values of sequence 211 that are non-zero modulo $\mu^1$. Part $i$ comprises the values that are zero modulo $\mu^i$, but are not zero modulo $\mu^{i+1}$. A final part $\xi$ contains values that are zero modulo a final power of $\mu^\xi$.

In principle, one could have $\mu^\xi \geq \alpha$, though typical embodiments will use $\mu^\xi < \alpha$. Typically, $\mu^\xi$ divides $\alpha$. In an embodiment, each prime factor of $\mu$ is also a prime factor of $\alpha$. In particular, one could take $\mu$ as a prime factor of $\alpha$. In an embodiment, the cyclotomic polynomial $X^N + 1$ is used, wherein $N$ is a power of 2. Here we have $\alpha = 2N$, so that $\mu^\xi$ is also a power of 2. Although one could choose $\mu$ to a power of 2 as well, the most reduction in computation is achieved in this context with $\mu = 2$.

For instance, in an embodiment the following parameters are used: $N = 2048 = 2^{11}$, and $\mu^\xi = 2^4$.

In other words, partitioning unit 210 is configured to partition sequence of integers 211 into multiple parts 220 based on their modular properties with respect to powers of $\mu$. The first subset contains integers that are not divisible by $\mu$ (non-zero modulo $\mu$). Each subsequent subset includes integers that are divisible by a subsequent power of $\mu$ but not by the next higher power of $\mu$. The final subset comprises integers that are divisible by the highest considered power of $\mu$.

Processing of the target polynomial, e.g., effecting the blind rotation for a next integer of the sequence of integers, needs to take into account fewer monomials of the target polynomial as processed so far.

For example, in an embodiment, in a first phase one may process the target polynomial for the integers in the first part of the partition, e.g., the values non-zero modulo $\mu$. In this case, each monomial of the target polynomial is processed. Next, one may split the target polynomial into multiple part polynomials having monomials with exponents that are zero modulo the integer $\mu$, and exponents that are non-zero modulo $\mu$. In a second phase, one may process the target polynomial, now represented by the multiple split polynomials, for integers in the second part of the partition, e.g., values zero modulo $\mu$. In this case, not all monomials of the target polynomial are processed, only the part polynomials comprising the monomials with exponents that are zero modulo $\mu$.

It is possible to continue this approach for multiple phases, e.g., splitting the part polynomials after each phase, depending on the divisibility level for $\mu$ of the exponents. However, in a more efficient approach the splitting is done only once. This splitting phase could be done before the first processing, e.g., processing of integers non-zero modulo $\mu$, or after the first processing, though typically before the second processing, e.g., the processing of integers in the second part of the partition.

In this approach, the target polynomial is split into multiple part polynomials, wherein each part polynomial of the multiple part polynomials comprises monomials of the target polynomial having exponents in the same equivalency class modulo a power of $\mu$ (e.g., $\mu$, e.g., $\mu^2$). The power of the $\mu$ used may be the highest power of $\mu$ considered when partitioning sequence of integers 211, e.g., $\mu^\xi$, though using a higher power would work as well.

For example, considering $\mu^2$ as the highest considered power, e.g., parameter $\xi=2$, one would split the target polynomial up into part polynomials, one of which has the monomials with an exponent that is 0 modulo $\mu^2$, one of which has the monomials with an exponent that is 1 modulo $\mu^2$, up to a part polynomial that has the monomials with an exponent that is $\mu^2 - 1$ modulo $\mu^2$.

Note that after splitting, the sum of the part polynomials equals the target polynomial. As such, the multiple part polynomials together represent the target polynomial. Multiplying the target polynomial with a monomial is equivalent to multiplying each of the part polynomials with the monomial.

An advantage of this approach to splitting is that it has to be done only once, since after multiplying a part polynomial with a unit monomial, the exponents stay in a same class modulo $\mu^\xi$, although possibly in a different class than before the multiplication.

In the embodiment shown, system 200 comprises a splitting unit 215. Splitting unit 215 performs a similar function as partitioning unit 210 but on the target polynomial. Splitting unit 215 is configured to split target polynomial 216 into multiple part polynomials 230 by splitting the monomials depending on the modular class of the associated exponent.

For example, in an embodiment in which $\mu=2$, and $\alpha$ a power of 2, target polynomial 216 may be split into 2 part polynomials: first part polynomial 231 has all monomials with an odd exponent, second part polynomial 232 has all monomials with an even exponent. For example, in an embodiment, in which $\mu=2$, and $\alpha$ a power of 2, target polynomial 216 may be split into 4 part polynomials: first part polynomial 231 has all monomials that are 0 modulo 4, second part polynomial 232 has all monomials that are 1 modulo 4, third part polynomial 233 has all monomials that are 2 modulo 4, fourth part polynomial 234 has all monomials that are 3 modulo 4.

For example, in an embodiment, a first part polynomial 1 comprises the monomials of target polynomial 216 that are zero modulo $\mu^{\xi}$. Part polynomial $i$ comprises the monomials with an exponent that is equal to $i$ modulo $\mu^{\xi}$. A final part polynomial $\mu^{\xi}$ comprises monomials with an exponent that is $\mu^{\xi} - 1$ modulo $\mu^{\xi}$.

In an embodiment, the target polynomial is split based on the equivalence classes modulo a power of $\mu$ (e.g., $\mu$, e.g., $\mu^2$, etc.). For example, if the final power is $\mu^{\xi}$, the target polynomial may be split into multiple part polynomials, wherein each part polynomial of the multiple part polynomials comprises monomials of the target polynomial having exponents in a same equivalency class modulo final power $\mu^{\xi}$.

For instance, in an embodiment using the following parameters: $N = 2048 = 2^{11}$, and $\mu^{\xi} = 2^4$, splitting may be done into $2^4$ polynomials.

System 200 comprises a processing unit 250 configured to update the target polynomial for a multiplication with a unit monomial, wherein the target polynomial is represented by the part polynomials. If for each integer in sequence 211, all of the part polynomials were updated, e.g., multiplied by the corresponding unit monomial, then at the end the sum of the split polynomials would be equal to a conventional algorithm in which the target polynomial is not split. However, in an embodiment, processing unit 250 skips multiplying part polynomials with part of partition 220, which cannot impact the desired coefficient representing the blind rotation.

For example, processing unit 250 may be configured to process in turn each of the parts of partition 220. In a first phase, the integers in the first part of partition 220, e.g., part 221, are processed. Here, each part polynomial is multiplied with $X^{-s \cdot a}$, for $a$ in the first part, and $s$ the corresponding secret value in the secret key. In a second phase, the integers in the second part of partition 220, e.g., part 222, are processed. Here only those part polynomials with exponents that are zero modulo $\mu$ are multiplied with $X^{-s \cdot a}$, for $a$ in the second part, and $s$ the corresponding secret value in the secret key. In a third phase, the integers in the third part of partition 220, e.g., part 223, are processed. Here only those part polynomials with exponents that are zero modulo $\mu^2$ are multiplied with $X^{-s \cdot a}$, for $a$ in the third part, and $s$ the corresponding secret value in the secret key. In general, in phase $i$, the integers in the $i$-th part of partition 220 are processed. Here only those part polynomials with exponents that are zero modulo $\mu^i$ are multiplied with $X^{-s \cdot a}$, for $a$ in the second part, and $s$ the corresponding secret value in the secret key.

Note again that multiplying with $X^{-s \cdot a}$ is done homomorphically, that is without knowledge of secret digit $s$. For example, for a binary key this can be done by performing a conditional update of a part polynomial based on a corresponding bit of the secret key, wherein if the bit is 0, the part polynomial remains unchanged, and if the bit is 1, the part polynomial is multiplied with a unit monomial with an exponent corresponding to a corresponding one of the sequence of integers. For example, such conditional updating may be done using a homomorphic multiplexor gate.

Note that for given $a$ and $s$, homomorphically multiplying the part polynomials with $X^{-s \cdot a}$ can be done in parallel. Such parallel processing represents another significant speed increase. Interestingly, this speed increase is particularly high when processing the integers with a low divisibility level, e.g., for integers that are non-zero modulo $\mu$. In fact one could opt to do the parallel processing only in some of the phases, e.g., only this first phase, or in the first number of phases, but not in the later phases. The speed-up resulting from this parallel processing may be similar or even greater than the speed-up obtained by the only partial updating of part polynomials as described herein.

In a typical embodiment the following three operations are performed in this order:

- splitting the target polynomial into multiple part polynomials having monomials with exponents zero modulo the integer $\mu$, and exponents non-zero modulo ,
- processing the blind rotation for a part of the partition corresponding to the values non-zero modulo $\mu$,
- processing the blind rotation for parts of the partition corresponding to the values zero modulo $\mu$,

But this order is not necessary, for example, in an embodiment processing the blind rotation for a part of the partition corresponding to the values non-zero modulo $\mu$ may be done first, even before the splitting. Accordingly, an embodiment may user the order:

- processing the blind rotation for a part of the partition corresponding to the values non-zero modulo $\mu$,
- splitting the target polynomial into multiple part polynomials having monomials with exponents zero modulo the integer $\mu$, and exponents non-zero modulo ,

- processing the blind rotation for parts of the partition corresponding to the values zero modulo $\mu$,

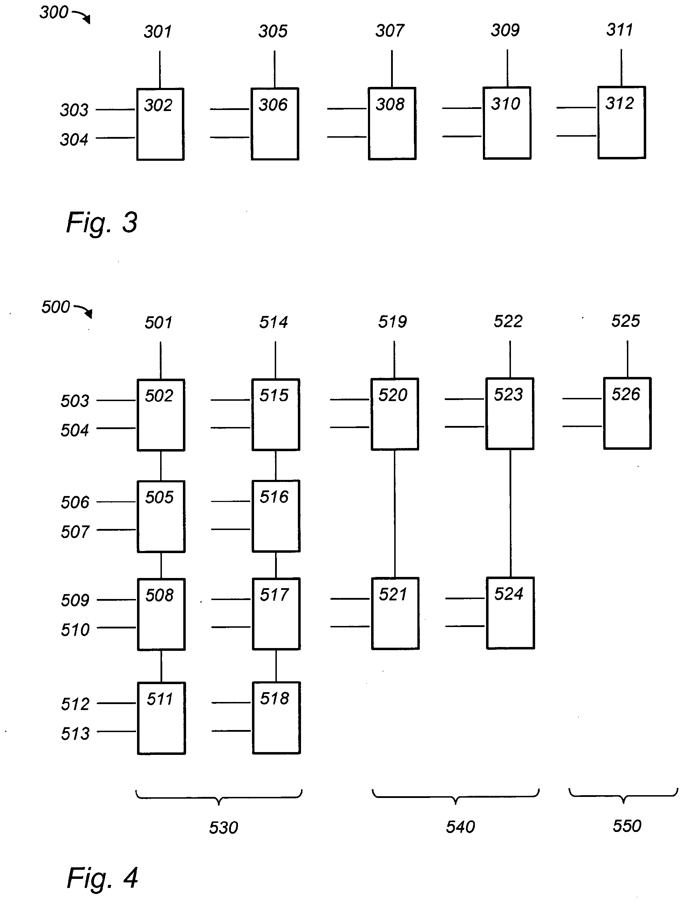

The process is illustrated in figures 3 and 4. **Figures 3 and 4** schematically compare a blind rotation in a conventional homomorphic computation system 300 with a blind rotation according to an embodiment in a homomorphic computation system 400.

**Figure 3** schematically shows an example of a conventional blind rotation 300 in a homomorphic computation system. Shown are the digits of a secret key, represented by bootstrapping keys; Shown are bootstrapping keys 301, 305, 307, 309, 311. The bootstrapping keys are input to homomorphic multiplexer gates; Shown are homomorphic multiplexer gates 302, 306, 308, 310, 312.

At the input of homomorphic multiplexer gate 302 are two intermediate target polynomials; Shown are intermediate target polynomial 303 and 304. One of them represents the current target polynomial, and the other represents the current target polynomial multiplied by $X^{-a_1}$, assuming $a_1$ is the integer corresponding to bootstrapping key 301. The output of homomorphic multiplexer gate 302 is the new current target polynomial, which forms one of the inputs to homomorphic multiplexer gate 306, etc., until all secret key digits are processed. Note that at each step the full-length polynomial is processed, that is each monomial of the target polynomial is multiplied by the unit monomial corresponding to the integer. This also means that each homomorphic multiplexer gate needs to process a full-length polynomial.

**Figure 4** schematically shows an example of an embodiment of a blind rotation 500 in a homomorphic computation system. The target polynomial has been split into four part polynomials, e.g., as may be done for an embodiment in which $\mu = 2$, and $\mu^2$ is the highest power of $\mu$ that is considered.

Shown are the digits of a secret key, represented by bootstrapping keys; Shown are bootstrapping keys 501, 514, 519, 522, 525, which may be equal to bootstrapping keys 301, 305, 307, 309, 311, though in a different order. In this example, keys 501 and 514 correspond to integers that are odd. Keys 519 and 522 correspond to integers that are even but not multiples of 4. Key 525 corresponds to an integer that is a multiple of 4. Note that the order of the keys will depend on the input to the algorithms, e.g., will depend on sequence of integers 211. Bootstrapping keys 501, 514, 519, 522, 525 correspond to integers $b_1$, $b_2$, $b_3$, $b_4$, $b_5$.

The target polynomial has been split into four part polynomials, corresponding to exponents that are 0, 1, 2, and 3 mod 4. Each row in Figure 4 corresponds to one of the split polynomials.

In a first phase 530, the integers in the first part of the partition, e.g., odd integers are processed. Accordingly, a homomorphic multiplexor gate is evaluated for each part polynomial; Shown are homomorphic multiplexor gates 502, 505, 508, and 511. Each of these homomorphic multiplexor gates takes as input bootstrapping key 501, e.g., an encrypted bit of the secret key and selects between the part polynomial and the part polynomial multiplied by $X^{-b_1}$. The outputs of the multiplexor gates form the new part polynomials that together represent the target polynomial, and which are processed in the same manner for the second odd integer, e.g., $b_2$.

In a second phase 540, the integers in the second part of the partition, e.g., even integers not multiples of 4, are processed. Accordingly, a homomorphic multiplexor gate is evaluated, but no longer for each part polynomial; Shown are homomorphic multiplexor gates 520, 521. Each of these homomorphic multiplexor gates takes as input bootstrapping key 519 and selects between a part polynomial and the part polynomial multiplied with by $X^{-b_3}$. Note that only half of the part polynomials are evaluated, e.g., only the part polynomials with even exponents. The outputs of the multiplexor gates form the new part polynomials which are processed in the same manner for the fourth integer $b_4$.

In a third phase 550, the integers in the third part of the partition, e.g., multiples of 4, are processed. Accordingly, a single homomorphic multiplexor gate 526 is evaluated for only one part polynomial. Homomorphic multiplexor gate 526 takes as input bootstrapping key 525 and selects between a part polynomial and the part polynomial multiplied by $X^{-b_5}$. Note that only one of the part polynomials is evaluated, e.g., only the part polynomial with exponents that are multiples of 4. The outputs of the multiplexor gate comprise the monomials the coefficients of which are needed for the final output, typically the constant term of the output of gate 526.

Although Figure 4 shows more multiplexor gates than Figure 3, they operate on polynomials that are approximately a fourth of the size of the corresponding target polynomial in Figure 3. Furthermore, the computation effort for the columns corresponding to bootstrapping keys 519 and 522 is only half that of the corresponding columns in Figure 3, and the computation effort for the column corresponding to bootstrapping key 525 is only a quarter of the corresponding column.

In the embodiment shown in Figure 3, the effort reduces from $\frac{1}{2} + \frac{1}{4} + \frac{1}{4}$ to $\frac{1}{2} + \frac{1}{8} + \frac{1}{16} = \frac{11}{16}$, that is a reduction of $\frac{5}{16}$ or about 31%.

Note that the multiplexor gates in the same column can be computed in parallel-this improvement alone will give a factor 4 speed-up, with respect to Figure 3.

Returning to Figure 2.

When processing unit 250 is done, the part polynomial comprising the constant term of the target polynomial has been fully updated. Accordingly, taking any coefficient of this part polynomial will represent the correct result. Typically, one obtains the constant term of this part polynomial, which is equal to the constant term in a conventional blind rotation algorithm. For example, system 200 may comprise a sample extraction unit 255 configured to extract a term of a part polynomial, e.g., a term corresponding to monomials having exponents in a zero equivalency class, in particular, extracting the constant term. The extracted value is encrypted output value 251, which is the result of the blind rotation.

It is noted that an embodiment could be configured to extract any other coefficient, instead of the constant term. In this case, the processing would be adapted so that the part polynomial containing the desired coefficient is fully updated.

There is an optimization for modulus switching unit 260 which makes the blind rotation algorithm even more efficient. Recall that a modulus switching comprises, for each coefficient of the encrypted value, multiplying it by a modulo switching quotient and performing a rounding operation. Conventionally, the rounding operation is a rounding to the nearest integer. Rounding to the nearest integer is usually chosen for the rounding operation.

A modification to the rounding operation will make the subsequent blind rotation operation faster. In particular, during the rounding operation it may be determined if rounding up or rounding down would produce a multiple of $\mu$, and if so, rounding up or rounding down is chosen respectively. If neither rounding $x$ up nor down, produces a value zero modulo $\mu$, then rounding may proceed to the nearest integer. In case $\mu = 2$, either rounding up or rounding down will produce an even integer. This means that all of the modulus switched integers will be zero modulo $\mu$, which in turn means that the entire first phase will become empty.

In an embodiment, a parameter $0 \leq \gamma < .5$ is used. Consider the value $x$, after multiplying with the modulo switching quotient. Suppose rounding up or down would produce a value zero modulo $\mu$, which we will refer to as $\dot{x}$. Note that if neither rounding $x$ up nor down, produces a value zero modulo $\mu$, then rounding proceeds to the nearest integer. If $|x - \dot{x}| \leq 1 - \gamma$, then $x$ is rounded to $\dot{x}$ otherwise, $x$ is rounded in the other direction. The parameter $\gamma$ controls how much additional noise is tolerated in exchange for a speed increase during the blind rotation. The value $\gamma = 0$ corresponds to the above embodiment, e.g., always rounding towards a value zero mod $\mu$ whenever possible. In an embodiment, $\gamma > 0$, e.g., $\gamma \geq 0.1$, or $\gamma \geq 0.2$, e.g., $\gamma = 0.2$. In an embodiment, $\gamma \leq 0.4$, e.g., $0.4 \geq \gamma \geq 0.2$.

In another approach, which may or may not be combined with the parameter suggested above, a number $l$ of coefficients is determined, e.g., predetermined, for which rounding in the opposite direction as rounding to the nearest integer is allowed, e.g., referred to as an opposite rounding. Accordingly, only as many as $l$ opposite roundings are used. In an embodiment, first coefficients are determined for which opposite rounding would result in an integer that is zero modulo modulo $\mu$. If these are fewer than $l$, e.g., the number of allowed opposite roundings, then all of these are used. If these are more than $l$, only $l$ opposite roundings are chosen. For example, these opposite roundings may be shorted based on the distance of the value $x$, e.g., the value after multiplying with the modulo switching quotient, from $1/2(\lfloor x \rfloor + \lceil x \rceil)$, with the smaller values ordered before larger values, and then taking the first $l$ coefficients corresponding to the first $l$ values in the sorted list.

As an example, the number of opposite roundings $l$ used may be at least 20, e.g, $l \geq 20$. For example, the number of opposite roundings $l$ used may be at least $2^8$, e.g, $l \geq 256$. Note, that no upperbound $l$ is needed, and all eligible opposite roundings may be used.

In a combined embodiment, only as many as $l$ opposite roundings are used having a parameter $\gamma$, e.g., $0.4 \geq \gamma \geq 0.2$. The parameters $l$ and/or $\gamma$ may be determined empirically. The parameters $l$ and/or $\gamma$ may be determined at or before compile time, or may be determined dynamically, e.g., based on the current amount of noise, e.g., as estimate by tracking noise induced by previous operation and/or reduced by previous bootstrappings.

Accordingly, in an embodiment, for at least part of the coefficients the rounding operation comprises determining if rounding up or rounding down would produce a multiple of $\mu$, and, if so, rounding up or rounding down respectively. The at least part, may be all of the coefficients. The determining may be terminated after $l$ opposite roundings have been used, etc.

The units of system 200, e.g., splitting unit 215, partitioning unit 210, etc., may be implemented in software, e.g., multiple computer instructions.

Below several further optional refinements, details, and embodiments are illustrated.

## Mathematical Notations & Results

Let $q$ be a positive integer, we note $\mathbb{Z}_q$ the ring $\mathbb{Z}/q\mathbb{Z}$. For some integer $\alpha \geq 0$, we note $\Phi_\alpha = \sum_{i=0}^{N} \phi_k X^i$ as the $\alpha^{th}$ cyclotomic polynomials , i.e. a monic polynomials with integer coefficients that are irreducible over the field of the rational numbers and with $N = \varphi(\alpha)$ with $\varphi$ the Euler's totient function. The ring $\mathbb{Z}_q[X]/\Phi_\alpha$ is denoted by $\mathfrak{R}_{q,\Phi_\alpha}$. The ring $\mathbb{Z}_q[X]/(X^N + 1)$, with $N$ a power of two, we use the notation $\mathfrak{R}_{q,\Phi_{2N}}$. Integers are denoted in lowercase and polynomials are noted in uppercase (except for $N$ which represent the degree of polynomials). We write $[.]_q$ to denote the $q$ modular reduction. The usual notations for the floor $\lfloor \cdot \rfloor$ , the ceil $\lceil \cdot \rceil$ and the round $\lfloor \cdot \rceil$ used. Let $\mathcal{D}$ be a probabilistic distribution. We denote $x \hookleftarrow \mathcal{D}(D)$ as the random sampling according to the distribution $\mathcal{D}$ from the support $D$. Specifically, we denote $\mathcal{U}(.)$ as the uniform distribution and $\mathcal{N}_{\sigma^2}$ as the Gaussian distribution with a mean set to zero and a standard deviation set to $\sigma$. We denote $Var(X)$ the variance and $\mathbb{E}(X)$ the expectation of a random variable $X$. Finally, we denote card($\mathbf{a}$) the cardinality of the set $\mathbf{a}$. In what follows, cyclotomic polynomials will be intensively used. We refer the reader to any mathematical lectures (e.g., (Conrad 2015)) for more details. We recall a general result about cyclotomic polynomials in the following lemma:

Let $\Phi_\alpha = \sum_{i=0}^{N} \phi_i X^i$ the $\alpha^{th}$ cyclotomic polynomial. Let $\eta \in \mathbb{Z}$ such that the prime factors of $\eta$ divide $\alpha$. Then, $\Phi_{\eta \cdot \alpha}(X) = \Phi_\alpha(X^\eta)$. $\eta$ is called the expansion factor of the $\alpha^{th}$ cyclotomic polynomial.

**About FHE ciphertexts and operations**

TFHE security, and more generally FHE security, is based on the hard problem Learning With Errors (LWE) (Regev 2005) its variant to the polynomial ring (RLWE) (Stehlé et al. 2009; Lyubashevsky, Peikert, and Regev 2010) and the Generalized (also called Modular) approach GLWE (Brakerski, Gentry, and Vaikuntanathan 2012; Langlois and Stehlé 2015). In what follows, we recall the ciphertexts definitions based on the notations introduced in (Chillotti et al. 2021).

Let $N \in \mathbb{N}$ be a polynomial size and $\alpha$ an integer such that $\Phi_\alpha = \sum_{i=0}^{N-1} \phi_i X^i$. Let $k \in \mathbb{N}$ be a GLWE dimension and $q \in \mathbb{N}$ be a ciphertext modulus. Let $\overline{S} = (S_0, \cdots, S_{k-1}) \in \mathfrak{R}_{q,\Phi_\alpha}^k$ be the secret key, $S_i = \sum_{j=0}^{N-1} s_{i,j} X^j$, where each coefficient $s_{i,j}$ is sampled from a uniform binary, uniform ternary or Gaussian distribution. Let $\vec{A} = (A_0, \cdots, A_{k-1}) \hookleftarrow \mathcal{U}(\mathfrak{R}_{q,\Phi_\alpha})^k$ be the mask with $A_i = \sum_{j=0}^{N-1} a_{i,j} X^j$, for $i \in [0, k)$,x where each $a_{i,j}$ is sampled from a uniform distribution. Let $E \in \mathfrak{R}_{q,\Phi_\alpha}^k$ be the error (or noise), where each coefficient $e_i$ is sampled from a Gaussian distribution $\mathcal{N}_{\sigma^2}$. Let $\Delta \in \mathbb{N}$ be the scaling factor depending on the plaintext space $p$, e.g., $\Delta = \frac{q}{2 \cdot p}$ when p|q. A GLWE ciphertext of a plaintext $M = \Delta \cdot \tilde{M} \in \mathfrak{R}_{q,\Phi_\alpha}$ under a secret key $\vec{S} \in \mathfrak{R}_{q,\Phi_\alpha}^k$ is defined as: $CT = \left( \vec{A}, B = \sum_{i=0}^{k-1} A_i \cdot S_i + \Delta \cdot \tilde{M} + E \right) \in GLWE_S(\Delta \cdot \tilde{M}) \subseteq \mathfrak{R}_{q,\Phi_\alpha}^{k+1}$. In the following we simplify the notation by using $GLWE_S(M) = GLWE_S(\Delta \cdot \tilde{M})$.

For a given decomposition base $\beta \in \mathbb{N}^*$ and a level decomposition $\ell \in \mathbb{N}^*$, a GLEV ciphertext of a message $M \in \mathfrak{R}_{q,\Phi_\alpha}$ under a secret key $\vec{S} \in \mathfrak{R}_{q,\Phi_\alpha}^k$ is a ciphertext composed of $\ell$ GLWE ciphertexts encrypting the same message $M$ for different scaling factors (given by the base $\beta$ and the level $\ell$). Let $CT_i \in GLWE_{\vec{S}}\left( \frac{q}{\beta^i} M \right) \subseteq \mathbb{R}_{q,\Phi_\alpha}^{k+1}$ for $i \in [0, \ell)$. Then, a GLEV ciphertext is denoted $\overline{CT}$ and is composed of $\ell$ GLWE ciphertexts. He is defined as: $\overline{CT} = (CT_0, \cdots, CT_{\ell-1}) \in GLEV_{\vec{S}}^{\beta,\ell}(M) \subseteq \mathfrak{R}_{q,\Phi_\alpha}^{\ell \times (k+1)}$ .

For a given decomposition base $\beta \in \mathbb{N}^*$ and a level decomposition $\ell \in \mathbb{N}^*$, a GGSW ciphertext encrypting a message $M \in \mathfrak{R}_{q,\Phi_\alpha}$ under a secret key $\vec{S} \in \mathfrak{R}_{q,\Phi_\alpha}^k$ is composed by $(k + 1)$ GLEV ciphertexts encrypting the same message $M$ multiplied by elements of the secret key for different scaling factor (given by the base $\beta$ and the level $\ell$). Let $\overline{CT}_j \in GLEV_{\vec{S}}^{(\beta,\ell)}\left( -S_j \cdot M \right) \subseteq \mathfrak{R}_{q,N}^{\ell \times (k+1)}$ for $j \in [0, k)$ and $\overline{CT}_k \in GLEV_{\vec{S}}^{(\beta,\ell)}(M) \subseteq \mathfrak{R}_{q,\Phi_\alpha}^{\ell \times (k+1)}$. Then, a GGSW ciphertext is denoted $\overline{\overline{CT}}$ and is composed of $k + 1$ GLEV ciphertexts. He is defined as:

$$\overline{\overline{\mathsf{CT}}} = \left(\overline{\mathsf{CT}}_0, \cdots, \overline{\mathsf{CT}}_k\right) \in \mathsf{GGSW}_{\vec{S}}^{\beta,\ell}(M) \subseteq \mathfrak{R}_{q,\Phi_\alpha}^{(k+1)\ell \times (k+1)}.$$

A GLWE ciphertext with $\alpha = 1$ is an LWE ciphertext and in this case we consider $n = k$ for the LWE size and we note all the elements of the ciphertext in lowercase (i.e., we note ct, $\vec{s}$, $\vec{a}$ and $b$). A GLWE ciphertext with $k = 1$ and $\alpha > 1$ is an RLWE ciphertext. This notation and structure can be extended to GLEV and GGSW as well.

The Modulus Switch (**MS**) takes as input a GLWE ciphertext $(A_0, \cdots, A_{k-1}, B) \in \mathfrak{R}_{q_{\text{in}},\Phi_\alpha}^{k+1}$ using a ciphertext modulus $q_{\text{in}}$ and outputs a new GLWE ciphertext $(A'_0, \cdots, A'_{k-1}, B') \in \mathfrak{R}_{q_{\text{out}},\Phi_\alpha}^{k+1}$ under a new ciphertext modulus $q_{\text{out}}$, such that each coefficient $a_{i,j} \in \mathbb{Z}_{q_{\text{in}}}$ (resp. $b_i$ of the polynomial $B$) becomes $a'_{i,j} = \left[\!\left[ a_{i,j} \frac{q_{\text{out}}}{q_{\text{in}}} \right]\!\right]_{q_{\text{out}}}$ (resp. $b'_i = \left[\!\left[ b_i \frac{q_{\text{out}}}{q_{\text{in}}} \right]\!\right]_{q_{\text{out}}}$) for $j \in [0, N)$. This operation is denoted as:

$$\mathsf{CT}_{\text{out}} \leftarrow \mathsf{MS}(\mathsf{CT}_{\text{in}}, q_{\text{out}})$$

The variance of the output noise $e_{\mathsf{MS}}$ after a **MS** is: $\mathsf{Var}(e_{\mathsf{MS}}) = \frac{q_{\text{out}}^2 \sigma_{\text{in}}^2}{q_{\text{in}}^2} + \frac{1}{12} - \frac{q_{\text{out}}^2}{12 q_{\text{in}}^2} + \frac{n}{24} + \frac{n \cdot q_{\text{out}}^2}{48 q_{\text{in}}^2}$ Where $\sigma_{\text{in}}$ is the noise of the input ciphertext. The noise analysis is detailed in (Chillotti et al. 2021).

The external product takes as input a GLWE ciphertext CT $\in$ GLWE$_{\vec{S}}(M)$ encrypting a message $M \in \mathfrak{R}_{q,\Phi_\alpha}^k$ and a GGSW ciphertext $\overline{\overline{\mathsf{CT}}} \in \mathsf{GGSW}_{\vec{S}}^{\beta,\ell}(M')$ encrypting a message $M' \in \mathfrak{R}_{q,\Phi_\alpha}^k$, both under the secret key $\vec{S} \in \mathfrak{R}_{q,\Phi_\alpha}^k$ and returns a GLWE ciphertext encrypting $M \cdot M'$ under the input secret key. This is denoted as:

$$\overline{\overline{\mathsf{CT}}} \boxdot \mathsf{CT} = \mathsf{CT}_{\text{out}} \in \mathsf{GLWE}_{\vec{S}}(M \cdot M')$$

The output noise variance of an external product between a GLWE$_{\vec{S}}$ ciphertext encrypted under a noise variance $\sigma_{\mathsf{GLWE}}^2$ and a $\mathsf{GGSW}_{\vec{S}}^{\beta,\ell}$ ciphertext encrypting an integer $s_i$ under the noise variance $\sigma_{\mathsf{GGSW}}^2$ is:

$$\mathsf{Var}(e_{EP}) = \ell \cdot (k+1) \cdot N \cdot \frac{\beta^2 + 2}{12} \cdot \sigma_{\mathsf{GGSW}}^2 + \frac{1}{16} \cdot \left(1 - kN \cdot \mathbb{E}(s_i)\right)^2$$
$$+ \frac{q^2 - \beta^{2\ell}}{24\beta^{2\ell}} \cdot \left(1 + kN \cdot \left(\mathsf{Var}(s_i) + \mathbb{E}^2(s_i)\right)\right) + \frac{kN}{8} \cdot \mathsf{Var}(s_i) + \frac{\sigma_{\mathsf{GLWE}}^2}{2}$$

The noise analysis is detailed in (Chillotti et al. 2021).
The CMux takes as input two GLWE ciphertexts, $\mathsf{CT}_0 \in \mathsf{GLWE}_{\vec{S}}(M_0)$ and $\mathsf{CT}_1 \in \mathsf{GLWE}_{\vec{S}}(M_1)$ and a selector $\overline{\overline{\mathsf{CT}}} \in \mathsf{GGSW}_{\vec{S}}^{\beta,\ell}(b)$ where $b \in \{0,1\}$ and outputs $\mathsf{CT}_b \in \mathsf{GLWE}_{\vec{S}}(M_b)$.

$$\mathsf{CT}_b \leftarrow \mathsf{CMux}\left(\mathsf{CT}_0, \mathsf{CT}_1, \overline{\overline{\mathsf{CT}}}\right) = (\mathsf{CT}_1 - \mathsf{CT}_0) \boxdot \overline{\overline{\mathsf{CT}}} + \mathsf{CT}_0$$

The output noise variance of a CMux is the same as that of the external product.
The Sample Extract (SE) is a noiseless operation that returns an LWE ciphertext encrypting the $i^{th}$ coefficient of an input GLWE ciphertext $\mathsf{CT}_{\text{in}} \in \mathsf{GLWE}_{\vec{S}}(M)$.

$$\mathsf{ct}_{\text{out}} \leftarrow \mathsf{SampleExtract}(\mathsf{CT}_{\text{in}}, i)$$

A sample extract takes as input a GLWE$_{\vec{S}}$ ciphertext $(A_0, \cdots, A_{k-1}, B) \in \mathfrak{R}_{q,\Phi_\alpha}$ under the secret key $\vec{S} =$

$(S_0, \cdots S_{k-1})$ with $A_i = \sum_{j=0}^{N} a_{i,j} X^j$ and $S_i = \sum_{j=0}^{N} s_{i,j} X^j$ for $i \in [0, k)$ and $B = \sum_{j=0}^{N} b_j X^j$ and returns a LWE$_{\vec{s}}$ ciphertext $(\tilde{a}_0, \cdots, \tilde{a}_{kN-1}, b_0)$ under the secret key $\vec{s} = (\tilde{s}_0, \cdots, \tilde{s}_{kN-1})$ where $\tilde{s}_{Ni+j} = s_{i,j}$ and $\tilde{a}_{Ni+j} = -a_{i,N-j}$ where $-a_{i,N} = a_{i,0}$, *for* $i \in [0, k-1]$ and $j \in [0, N-1]$.

When we extract the first coefficient of the GLWE ciphertext, we simply use the notation **SampleExtract**(CT$_{in}$).

The Key Switch (**KS**) is an operation that allows switching from the secret key $\vec{s}_{in} \in \mathbb{Z}_q^{n_{in}}$ to the secret key $\vec{s}_{out} \in \mathbb{Z}_q^{n_{out}}$ with $n_{in} > n_{out}$. It takes as input an LWE ciphertext encrypting $m \in \mathbb{Z}_q$ under the secret key $\mathbf{s}_{in}$, denoted as $ct_{in} \in \text{LWE}_{\overrightarrow{s_{in}}}(m) \subseteq \mathbb{Z}_q^{n_{in}+1}$, and a Key Switching Key (KSK) which is a ciphertext encrypting the input secret key $\overrightarrow{s_{in}}$ under the output secret key $\overrightarrow{s_{out}}$. The key switch outputs an LWE ciphertext encrypting m under the secret key $\mathbf{s}_{in}$, denoted as $ct_{out} \in \text{LWE}_{\overrightarrow{s_{out}}}(m) \subseteq \mathbb{Z}_q^{n_{out}+1}$ .

$$ct_{out} \leftarrow \mathbf{KS}(ct_{in}, \text{KSK})$$

The output noise variance of a **KS** and its variants is detailed in (Chillotti et al. 2021).

For efficiency reasons, the key switch operation is often performed before the bootstrapping (Chillotti, Joye, and Paillier 2021). By reducing the dimension of the input LWE ciphertext for the bootstrapping, the number of chained CMuxes is reduced, resulting in an overall speed-up.

**Functional/Programmable Bootstrapping**

In TFHE-like schemes (Alperin-Sheriff and Peikert 2014; Ducas and Micciancio 2015) (Gama et al. 2016; Chillotti, Gama, et al. 2020; Chillotti, Joye, et al. 2020; Chillotti, Joye, and Paillier 2021), bootstrapping is an operation that reduces the noise of an LWE ciphertext while simultaneously evaluating any univariate function $f$ represented as a lookup table. This operation is often referred to as the functional or programmable bootstrapping (PBS). Compared to other schemes like CKKS (Cheon et al. 2017), BGV (Brakerski, Gentry, and Vaikuntanathan 2012) or BFV (Brakerski 2012; Fan and Vercauteren 2012), the latency of this operation is significantly lower for small plaintext inputs (smaller than 10 bits). In the paper (Joye and Walter 2022), the authors describe how to perform a **PBS** on any cyclotomic polynomial $\Phi_\alpha = \sum_{i=0}^{N} \phi_i X^i$ such that $\Phi_\alpha$ is the $\alpha^{th}$ cyclotomic polynomial. The description below follows their approach.

The PBS takes as input a bootstrapping key (BSK), a lookup table LUT$_f \in \mathfrak{R}_{q,\Phi_\alpha}^{k+1}$ and an encrypted LWE ciphertext of a message $m$ in $\mathbb{Z}_q^{n+1}$ under a secret key $\vec{s}_{in}$ and outputs an LWE ciphertext encrypting the message $f(m)$ under the secret key $\vec{s}_{out}$ with reduced noise.

$$ct_{out} \leftarrow \text{PBS}\big(ct_{in}, \text{LUT}_f, \text{BSK}\big)$$

The bootstrapping key is a GGSW encryption of each element of the input secret key $\mathbf{s}_{in}$, encrypted under a key $\vec{S}_{out} \in \mathfrak{R}_{q,\Phi_\alpha}^{k}$. We have BSK $= (\text{BSK}_0, \cdots, \text{BSK}_{n-1})$ where $\text{BSK}_i \in \text{GGSW}_{\vec{S}_{out}}^{\beta,\ell}(s_i) \subseteq \mathfrak{R}_{q,\Phi_\alpha}^{(k+1)\ell \times (k+1)}$ for $i \in [0, n)$ and where $s_i$ corresponds of the elements of the LWE input secret key $\vec{s}$.

The main idea of (Joye and Walter 2022) is to generalize the encoding of the lookup tables (LUT) depending on the quotient polynomial $\Phi_\alpha$. Let $T$ be the table with $N$ input/output values $\{T[i]\}_{i=0}^{N-1}$. The goal is to ensure that $T[t] \leftarrow$ **SampleExtract**(LUT $\cdot X^{-t}$) for $t \in [0, N-1]$. The encoding for the LUT is then given by:

$$\text{LUT}_{\vec{s}} = \big[\vec{0}, \Delta V(x)\big] \in \text{GLWE}_{\vec{s}}\big(\Delta V(x)\big) \subseteq \big(\mathbb{Z}_q[x]/\Phi_\alpha\big)^k,$$

where

$$V(x) = \sum_{i=0}^{N-1} v_i X^i \text{ with } v_i = \sum_{j=0}^{i} \frac{\phi_{i-j}}{\phi_0} T[j].$$

The PBS is computed in three steps: a modulus switch (MS), a blind rotation (BR) and finally a sample extract (SE). Below, we recall the definition of the blind rotation.

The Blind Rotation (**BR**) takes as input a ciphertext $ct_{\mathbf{MS}} = (a_0, \cdots, a_{n-1}, b) \in \mathbb{Z}_\alpha^{n+1}$, a lookup table $LUT_f$, and a bootstrapping key (BSK). It outputs a $GLWE \in \mathfrak{R}_{q,\Phi_\alpha}^{k+1}$ in which constant coefficient encrypts $f(m)$.

The goal of the blind rotation is to homomorphically compute $LUT_f \cdot X^{-b+\sum_{i=0}^{n-1} a_i s_i}$. In a nutshell, the algorithm is as following: at first step, one computes $LUT_f \cdot X^{-b} = CT_{-b}$. Then, a loop over the $a_i$ is applied. One starts to compute $CT_{-b+a_0} = CT_{-b}X^{a_0}$ followed by a CMux such that $CMux(CT_{-b}, CT_{-b+a_0}, BSK_0) = LUT_f \cdot X^{-b+a_0 s_0} = CT_{-b+a_0 \cdot s_0}$. At the $j^{th}$ step, one computes $CT_{-b+\sum_{i=0}^{j-1} a_i \cdot s_i} \cdot X^{a_j}$ followed by

$$CMux\left(CT_{-b+\sum_{i=0}^{j-1} a_i \cdot s_i} \cdot X^{a_j}, CT_{-b+\sum_{i=0}^{j-1} a_i \cdot s_i}, BSK_j\right) = CT_{-b+\sum_{i=0}^{j} a_i \cdot s_i} \quad \text{for } j \in [0, n-1].$$

$$\cdot \; CT_{\mathbf{BR}} = CT_{-b+\sum_{i=0}^{n-1} a_i \cdot s_i} \leftarrow \mathbf{BR}(ct_{\mathbf{MS}}, BSK, LUT)$$

The output noise variance of a **PBS** between a noiseless input lookup table $LUT \in GLWE_{\vec{S}}$ and the $n$ bootstrapping key $BSK \in GGSW_{\vec{S}}^{\beta,\ell}$ ciphertexts encrypting the binary secret $s_i$, for $i \in [0, n-1]$, under the noise variance $\sigma_{BSK}^2$ is:

$$\mathrm{Var}(e_{\mathbf{PBS}}) \quad = n \cdot \ell \cdot (k+1) \cdot N \cdot \frac{\beta^2+2}{12} \cdot \sigma_{BSK}^2 + \frac{n}{16} \cdot \left(1 - \frac{kN}{2}\right)^2$$
$$+ \quad n \cdot \frac{q^2 - \beta^{2\ell}}{24\beta^{2\ell}} \cdot \left(1 + \frac{kN}{2}\right) + \frac{nkN}{32}$$

### NTRU-based PBS

In the paper (Bonte et al. 2022), the authors define an alternative manner to compute a PBS based on the NTRU encryption scheme (see (Hoffstein, Pipher, and Silverman 2006) for instance). All operations from the original TFHE scheme have been redefined to support the PBS. In what follows, this alternative PBS could be used in place of/in combination with the PBS for TFHE-like schemes.

To apply the proposed methods, the CMuxes in the lookup table may be expressed as a selection between one or several solutions. Moreover, the order of the operations in the dot product between a and s shouldn't be determined by the underlying PBS method. In what follows, any of such methods would be implied by the expression TFHE-like schemes.

### Probability and Distribution

Let $A \hookleftarrow \mathcal{N}(\mu, \sigma^2)$, $p_{err}$ an error probability and $\varphi$, CDF of $A$

We define the standard score for $p_{err}$ as

$$z^*(p_{err}) = \varphi^{-1}\left(1 - \frac{p_{err}}{2}\right) = -\varphi^{-1}\left(\frac{p_{err}}{2}\right)$$

We have

$$\mathbb{P}(A \notin [\mu - z^*\sigma, \mu + z^*\sigma] < p_{err}$$

Let $A \hookleftarrow \mathcal{N}(0, \sigma^2)$ and $t \in \mathbb{R}$ and $p_{err} \in [0,1]$

Let $z^*(p_{err})$, the standard score for $p_{err}$, we have

$$z^*(p_{err})\sigma < t \Rightarrow \mathbb{P}(A \notin [-t, t] < p_{err}$$

**Noise bound**

In this section, we give an example on how to compute a noise bound from a precision, a given encoding and some error probability.

We call noise bound a threshold related to the noise inside a ciphertext. It is written $t(\cdot)$ and is often parametrized by a probability, but note that it could be something else. For security reasons, the exact noise value has to be secret, however the variance of its distribution is publicly known. The noise bound represents a limit that we do not want to cross in terms of variance of the error in the ciphertexts. This noise bound is related to several metadata such as the number of bits to represent the message or the probability of being correct.

For the sake of the argument, let's assume that our encoding is the following: given a message m on a given number of bit $p$, we encrypt this message in one ciphertext in the most significant bits.

Remember that an LWE ciphertext is a tuple $(a_1, \cdots, a_n, b)$ with $b = \sum_{i=1}^{k} a_i \cdot s_i + e + \Delta m$ such that $(s_1, \cdots, s_k) \in \mathbb{Z}_q^k$ is the secret key with coefficients either sampled from a uniform binary, uniform ternary or Gaussian distribution, $\{a_i\}_{i=1}^{k}$ are integers in $\mathbb{Z}_q$ sampled from the uniform distribution in $\mathbb{Z}/q\mathbb{Z}$, $e$ is the error sampled from a centered Gaussian distribution $\chi_\sigma$, $\Delta m$ is the message re-scaled in the Most Significant Bits.

**Link between noise bound and message in a cryptosystem where the message is in the MSBs (TFHE, FHEW, BFV, CKKS)**

The noise term $e$ is sampled from a Gaussian distribution and we want to find a threshold on its variance so that if the noise remains below this threshold, the computation will happen correctly up to a given probability $p_{err}$.

In this part, we first explain bootstrapping modulo any cyclotomic polynomial.

**Generalization of Extended Bootstrapping**

The **EBS** is compliant with any cyclotomic polynomials, as we show below. This removes the constraint of having power of two quotient polynomial in $\mathfrak{R}_{q,\Phi_\alpha}^k$. Let us start by redefining the $\iota$ function.

Let $\Phi_\alpha = \sum_{i=0}^{N} \phi_i X^i$ be the $\alpha^{th}$ cyclotomic polynomial. Let $\eta \in \mathbb{Z}$ such that the prime factors of $\eta$ divide $\alpha$. Let $\iota$ such that:

$$\iota: \mathfrak{R}_{q,\Phi_\alpha} \to \mathfrak{R}_{q,\Phi_{\alpha\eta}}$$
$$P(X) = \sum_{i=0}^{N-1} p_i \cdot X^i \mapsto P_{\text{ext}}(X) = \sum_{i=0}^{N-1} p_i \cdot X^{\eta i}$$

Then, $\iota$ is a ring homomorphism.

Proof. Let us show that $\iota$ is a ring homomorphism. We have $\iota$ (1) = 1. Let $P(X) = \sum_{i=0}^{N-1} a_i X^i$ and $Q(X) = \sum_{i=0}^{N-1} b_i X^i$ both in $\mathfrak{R}_{q,\Phi_\alpha}$. Let $P_{\text{ext}} = \iota$ $(P(X)) = \sum_{i=0}^{N-1} p_i X^{\eta i}$ and $Q_{\text{ext}} = \iota\big(Q(X)\big) = \sum_{i=0}^{N-1} q_i X^{\eta i}$ both in $\mathfrak{R}_{q,\Phi_{\alpha\cdot\eta}}$. The additive morphism is verified: $\iota\big(P(X) + Q(X)\big) = \iota\big(\sum_{i=0}^{N-1}(p_i + q_i) X^i\big) = \sum_{i=0}^{N-1}(p_i + q_i) X^{\eta i} = \iota\big(P(X)\big) +$ $\iota$ (Q(X)). We have $\Phi_{\eta\alpha}(X) = \Phi_\alpha(X^\eta)$, the multiplication morphism is verified: indeed, as a polynomial is a sum of monomials and the morphism is verified for addition, we only need to study the multiplication of two monomials. So for $i$ and $j$ both in [0, N), we have:

$$\iota\big(X^i \cdot X^j \mod \Phi_\alpha\big) = \iota\big(X^{i+j} \mod \Phi_\alpha\big) = X^{(i+j)\eta} \mod \Phi_{\alpha\eta} = X^{i\eta} X^{j\eta} \mod \Phi_{\alpha\eta} =$$
$$\iota\big(X^i \mod \Phi_\alpha\big)\iota\big(X^j \mod \Phi_\alpha\big). \square$$

□

By applying the $\iota$ function to each polynomial of a GLWE ciphertext in $\mathfrak{R}_{q,\Phi_\alpha}^{k+1}$ (resp., a GGSW $\in \mathfrak{R}_{q,\Phi_\alpha}^{(k+1)\ell \times (k+1)}$) under a secret key $\vec{S}$, we obtain an extended GLWE $\in \mathfrak{R}_{q,\Phi_{\alpha\eta}}^{k+1}$ (resp., an extended GGSW ciphertext $\mathfrak{R}_{q,\Phi_{\alpha\eta}}^{(k+1)\ell \times (k+1)}$) under an extended secret key

$$\vec{S}_{\text{ext}} = \iota(\vec{S}). \quad \begin{aligned} \iota\left(\text{GLWE}_{\vec{S}}(\Delta M)\right) &= \text{GLWE}_{\vec{S}_{\text{ext}}}(\Delta M_{\text{ext}}) \\ \iota\left(\text{GGSW}_{\vec{S}}^{\beta,\ell}(M')\right) &= \text{GGSW}_{\vec{S}_{\text{ext}}}^{\beta,\ell}(M'_{\text{ext}}) \end{aligned}$$

Then the external product is naturally compliant with the extended ciphertexts:

$$\text{GLWE}_{\vec{S}_{\text{ext}}}(\Delta M_{\text{ext}}) \boxdot \text{GGSW}_{\vec{S}_{\text{ext}}}^{\beta,\ell}(M'_{\text{ext}}) = \text{GLWE}_{\vec{S}_{\text{ext}}}(\Delta M_{\text{ext}} \cdot M'_{\text{ext}})$$

Let $M \in \mathfrak{R}_{q,\Phi_{\alpha\eta}}$. Let $\text{GLWE}_{\vec{S}_{\text{ext}}}(\Delta M) \in \mathfrak{R}_{q,\Phi_{\alpha\eta}}^{k+1}$ an GLWE ciphertext encrypting M under the extended secret key $\vec{S}_{\text{ext}} \leftarrow \iota(\vec{S})$, with $\mathbf{S} \in \mathfrak{R}_{q,\Phi_\alpha}^k$. Let $\text{GGSW}_{\vec{S}_{\text{ext}}}^{\beta,\ell}(M'_{\text{ext}}) \in \mathfrak{R}_{q,\Phi_{\alpha\eta}}^{(k+1)\ell \times (k+1)}$ be and extended GGSW ciphertext encrypting an extended message $M'_{\text{ext}}$ under the same extended secret key $\vec{S}_{\text{ext}}$. Then we have

$$\text{GLWE}_{\vec{S}_{\text{ext}}}(\Delta M) \boxdot \text{GGSW}_{\vec{S}_{\text{ext}}}^{\beta,\ell}(M'_{\text{ext}}) = \text{GLWE}_{\vec{S}_{\text{ext}}}(\Delta M \cdot M_{\text{ext}}') \qquad . \qquad \text{Proof.} \qquad \text{Let}$$

$$M = \sum_{i=0}^{\eta N-1} m_i X^i = \sum_{i=0}^{\eta} \sum_{j=0}^{N-1} m_{i\eta+j} X^{i\eta+j} \in \mathfrak{R}_{\alpha\eta} \qquad . \qquad \text{We} \qquad \text{have}$$

$$\sum_{j=0}^{\eta-1} \iota\left(\text{GLWE}_{\vec{S}}\left(\sum_{i=0}^{N-1} \Delta m_{i\eta+j} X^i\right)\right) \cdot X^j = \text{GLWE}_{\vec{S}_{\text{ext}}}(\Delta M) \quad . \text{ Then, we have:}$$

$$\sum_{j=0}^{\eta-1} \iota\left(\text{GLWE}_{\vec{S}}\left(\sum_{i=0}^{N-1} \Delta m_{i\eta+j} X^i\right)\right) \boxdot \text{GGSW}_{\vec{S}_{\text{ext}}}^{\beta,\ell}(M'_{\text{ext}}) \cdot X^j$$

$$= \sum_{j=0}^{\eta-1} \left(\text{GLWE}_{\vec{S}_{\text{ext}}}\left(\sum_{i=0}^{N-1} \Delta m_{i\eta+j} X^{\eta i} \cdot M'_{\text{ext}}\right)\right) \cdot X^j \qquad\qquad \square$$

$$= \sum_{j=0}^{\eta-1} \left(\text{GLWE}_{\vec{S}_{\text{ext}}}\left(\sum_{i=0}^{N-1} \Delta m_{i\eta+j} X^{\eta i} \cdot M'_{\text{ext}} \cdot X^j\right)\right) = \text{GLWE}_{\vec{S}_{\text{ext}}}(\Delta M \cdot M'_{\text{ext}}).$$

Note that the message in the extended GLWE ciphertext does not need to be extended through the $\iota$ function, as long as the secret key of the GLWE ciphertext is $\mathbf{S}_{\text{ext}}$. By encrypting a lookup tables in $\mathfrak{R}_{q,\alpha\eta}$ into an extended GLWE ciphertext using the encoding from (Joye and Walter 2022), the **EBS** can be computed as in the original PBS algorithm and is expressed as following: $\text{ct}_{\text{out}} \leftarrow \textbf{EBS}(\text{ct}_{\text{in}}, \text{LUT}_f, \text{BSK})$ where $\text{ct}_{\text{out}} \in \mathbb{Z}_q^{kN+1}$, $\text{ct}_{\text{in}} \in \mathbb{Z}_{\alpha\eta}^{n+1}$, $\text{LUT}_f \in \mathfrak{R}_{q,\Phi_{\alpha\eta}}$ and $\text{BSK} \in \left[\mathfrak{R}_{q,\Phi_\alpha}^{(k+1)\ell \times (k+1)}\right]^n$.

**Generalization of the Parallelized Extended Bootstrapping**

After defining the function $\iota$, we introduce another function, $\tau$ which allows splitting a message encrypted in a extended GLWE ciphertext into several smaller GLWE ciphertexts. Each of these smaller ciphertexts encrypt a part of the lookup table. This enables performing external products on each the smaller part of the lookup table, and thus a kind of parallelization of the blind rotation.

In this part, we focus on generalizing the Parallelized **EBS** to any cyclotomic polynomial. Let us start by redefining the $\tau$ function.

Let $\Phi_\alpha = \sum_{i=0}^N \phi_i X^i$ the $\alpha^{th}$ cyclotomic polynomial and $\Phi_{\eta\alpha} = \sum_{i=0}^{\eta N} \phi'_i X^i = \sum_{i=0}^N \phi_i X^{\eta i}$ the $\eta\alpha^{th}$ cyclotomic polynomial. Let $\tau$ be defined as:

$$\tau \colon \mathfrak{R}_{q,\Phi_{\alpha \cdot \eta}} \quad \to \left[\mathfrak{R}_{q,\Phi_{\alpha}}\right]^{\eta}$$

$$P(x) = \sum_{i=0}^{\eta N - 1} p_i \cdot x^i \quad \mapsto \left[P_0(x), \cdots, P_{\eta-1}(x)\right]$$

With $P_j(x) = \sum_{i=0}^{N-1} p_{i\eta + j} \cdot x^i$ for $j \in [0, \eta)$. Then $\tau$ is an isomorphism.

Proof. Let $f$ be a function such that:

$$f \colon \left[\mathfrak{R}_{q,\Phi_{\alpha}}\right]^{\eta} \quad \to \mathfrak{R}_{q,\Phi_{\alpha \cdot \eta}}$$

$$\left[P_0(x), \cdots, P_{\eta-1}(x)\right] \quad \mapsto P(x) = \sum_{i=0}^{\eta N - 1} p_i \cdot x^i$$

With $P_j(x) = \sum_{i=0}^{N-1} p_{i\eta + j} \cdot x^i$ for $j \in [0, \eta)$. Then, we directly have $f(\tau(P(x))) = P(x)$ and $\tau(f([P_0(x), \cdots, P_{\eta-1}(x)])) = [P_0(x), \cdots, P_{\eta-1}(x)]$. So $f$ corresponds to $\tau^{-1}$, thus $\tau$ is an isomorphism. □

By applying the function $\tau$ to each polynomial composing a GLWE ciphertext in $\mathfrak{R}_{q,\Phi_{\alpha \cdot \eta}}^{k+1}$, encrypted under an extended secret key $\vec{S}_{\text{ext}} = [S_{\text{ext},0}, \cdots, S_{\text{ext},k-1}]$ (with $S_{\text{ext},i} = \sum_{j=0}^{N-1} s_{j,i} X^{\eta j}$ ), we then obtain $\eta$ GLWE ciphertexts in $\mathfrak{R}_{q,\Phi_{\alpha}}^{k+1}$ encrypted under a secret key $\vec{S} = [S_0, \cdots, S_k - 1]$ (with $S_i = \sum_{j=0}^{N-1} s_{j,i} X^j$ ).

Performing an external product between an extended GGSW ciphertext encrypting a bit $b$ and an GLWE ciphertext encrypted under an extended secret key can be computed on $\eta$ GLWE by using the function $\tau$. Indeed we have:

$$\text{GLWE}_{\vec{S}_{\text{ext}}}(\Delta M) \boxdot \text{GGSW}_{\vec{S}_{\text{ext}}}(b)$$
$$= \quad \tau^{-1}\left[\text{GLWE}_{\vec{S}}(\Delta M_0) \boxdot \text{GGSW}_{\vec{S}}(b), \cdots, \text{GLWE}_{\vec{S}}(\Delta M_{\eta-1}) \boxdot \text{GGSW}_{\vec{S}}(b)\right]$$

with $\text{GLWE}_{\vec{S}_{\text{ext}}}(\Delta M) \in \mathfrak{R}_{q,\alpha\eta}^{k+1}$ and $\tau(M) = (M_0, \cdots, M_{\eta-1})$ with $M \in \mathfrak{R}_{q,\Phi_{\alpha\eta}}$ and $M_i \in \mathfrak{R}_{q,\Phi_{\alpha}}$ for $i \in [0, \eta)$.

In what follows, we denote the extended look-up table by $\text{LUT} \in \mathfrak{R}_{q,\Phi_{\alpha\eta}}^{k+1}$. The smaller look-up table obtained by $\tau(\text{LUT})$ are denoted $\text{lut}_i \in \mathfrak{R}_{q,\alpha}^{k+1}$ for $i \in [0,\eta)$.

$$\tau(\text{LUT}) = \left[\text{lut}_0, \cdots, \text{lut}_{\eta-1}\right]$$

During the blind rotation, the function $\tau$ may be used to split the lookup table in $\mathfrak{R}_{\alpha\eta}^{k+1}$ into $\eta$ lookup tables in $\mathfrak{R}_{\alpha}^{k+1}$. Several small CMuxes may then be performed in parallel. This method may be used for parallelization, however, it can also be applied in a sequential context. In the following, we refer to the **EBS** for both the parallelized and the sequential versions. Indeed, even in sequential context, the Parallelized version is equal or better than the extended one.

In the extended bootstrapping with $\mathfrak{R}_{2N\eta}$, the cyclotomic polynomials used for the benchmarks, the cost of one polynomial product is approximately $N_\eta \log_2(N_\eta)$ (i.e., using an FFT-based algorithm). In the parallelized version, to perform the same operation in $\mathfrak{R}_{2N}$ cyclotomic polynomials, we need to perform $\eta$ polynomial products, each with an individual cost of $N\log_2(N)$.

In the following, we make explicit how to compute the rotation without using $\tau$ and $\tau^{-1}$, by performing inner rotations on each of the smaller luts and updating their index accordingly.

We make this rotation explicit in the following lemma:

Let $\tau$ the function defined above. Let $P(X) = \sum_{i=0}^{\eta N - 1} p_i X^i$ be a polynomial in $\mathfrak{R}_{q,\Phi_{\alpha\eta}}$ such that $\tau(P(X)) = [P_0(X), \cdots, P_{\eta-1}(X)]$ with $P_i(X) = \sum_{j=0}^{N-1} p_{j\eta + i} X^j$ a polynomial in $\mathfrak{R}_{q,\Phi_{\alpha}}$ for $i \in [0,\eta)$.

For any $\kappa \in \mathbb{Z}$ we have $\tau(P(X) \cdot X^\kappa) = [P'_0(X), \cdots, P'_{\eta-1}(X)]$ with $P'_j(X) = P_{[(j-\kappa)]_\eta}(X) \cdot X^{\left\lceil \frac{\kappa-j}{\eta} \right\rceil}$.

A consequence of this lemma is that applying a rotation $X^\kappa$, in $\mathsf{LUT} \in \mathfrak{R}_{q,\Phi_{\alpha\eta}}$, can be expressed as changing the index of $\mathsf{lut} \in \mathfrak{R}_{q,\Phi_\alpha}$ along with a rotation within each lut. Furthermore, we show that two lookup tables, $\mathsf{lut}_i$ and $\mathsf{lut}_j$, with $i \neq j$, will never interact during the rotation.

**Examples of range of values for cryptographic parameters**

The algorithms described in what follows need some parameters to be set. In the experiments we conducted, the LWE dimension ($n$) take a wide range of values: from 400 (small precision) to 2048 (big precision $\approx 20$ bits). The polynomial size (N) takes power-of-two values between $2^8$ and $2^{17}$. The GLWE dimension ($k$) is between 1 and 6. The decomposition log base ($\mathcal{B}$) and the level ($\ell$) have values between 1 and 64 (more generally, the logarithm of the ciphertext modulus). The extended factor $\eta$ is a power of two and takes values from 0 to $2^8$, and the integer $d$, which corresponds to the number of changed values during the modulus switch. These values can range from 0 to $n/2$.

As seen in the previous section, the security of fully homomorphic encryption schemes, including the TFHE-like ones, relies on the noise. Each ciphertext contains a small amount of noise, which acts as a small randomness added during the encryption process. All along operations, this noise will grow. In the case where it becomes too large, it may overwrite the initial plaintext and compromise the correctness of the scheme. To avoid this, the idea is to use a bootstrapping, i.e., an operator dedicated to noise reduction. To correctly operate, this relies on a public material, called the bootstrapping key. The main idea behind a bootstrapping is to homomorphically apply the decryption circuit on the input ciphertext. This allows reducing the error without requiring to publicly reveal the secret key. TFHE-like schemes have a fast bootstrapping operation to do so quite efficiently. One of the particularity of the scheme family is about the possibility to compute a function while reducing the error, and at the same cost as a basic noise reduction. The bootstrapping is then called Programmable, abbreviated PBS.

From the state-of-the-art, we identify the following limitations regarding the TFHE bootstrapping:

Although it is the lowest among all FHE schemes, the latency of the TFHE-like scheme bootstrapping remains high, particularly for precision greater than 5 bits. As shown in previous works, its time complexity as a function of the input precision becomes exponential beyond this point;

The recent attacks in the IND-CPA$^d$ security model have a non-negligible impact on the latency of the bootstrapping because it requires having cryptographic parameters ensuring a smaller failure probability. This leads to a huge slowdown in the latency, comparable to what is obtained when using the next input precision. For instance, the complexity of a bootstrapping with 4-bits of input precision with a failure probability smaller than $2^{-128}$ is similar to the one with 5-bits and $2^{-64}$;

By construction, the bootstrapping algorithm remains mostly a sequential operation, making it difficult to parallelize. This limits the use of recent hardware architectures that are highly parallel, such as GPUs or FPGAs.

**Sorted Extended Bootstrapping (S-PBS)**

The **PBS** latency is reduced by decreasing the number of external products (products between a GLWE ciphertext and a GGSW ciphertext) that need to be computed. External products represent the costliest operation in the **PBS**. The approach comes from studying the evolution of the lookup table throughout the blind rotation computation in the context of **EBS**. In particular, this analysis reveals patterns of rotation between the different split lookup tables depending on the value of each rotation. We demonstrate that, based on these patterns, some of the external products are unnecessary for obtaining the correct final result. We highlight that by sorting the order of each rotation in the blind rotation, we can maximize the number of external products that can be removed.

**Companion Modulus Switch (CMS)**

We propose a modification to the modulus switch operation with the aim of having more elements in the blind rotation that satisfy the reduction of external products during the computation of the **S-PBS**. The idea is to leverage the sorting in **S-PBS** by grouping more elements into classes of sorted elements which reduces the number of external products. To achieve this, we adjust the modulus switch operation so that instead of having a basic rounding, we thoroughly choose to compute a larger approximation, ensuring the resulting value belongs to the appropriate sorted class. This adjustment leads to additional latency reduction for **PBS**.

**More parallelism for less latency**

Finally, we focus on further enhancing the parallelization of the **EBS** and its sorted parallelized equivalent by mixing several steps of the blind rotation into a single parallelized operation. We show how to efficiently integrate techniques from (Bourse et al. 2018; Z. Li et al. 2024; Zhou et al. 2018; Joye and Paillier 2022) within our sorted approach. We analyze the balance between the extended factor and the number of parallelized external products to achieve optimal parallelization efficiency. This leads to a highly parallel bootstrapping, which is particularly well suited for hardware architectures, and will enable super low-latency **PBS**. Note that we leave the implementation on dedicated hardware as future work, focusing only on CPUs for now.

**Technical Overview**

Sorted Extended Bootstrapping (**S-PBS**)

With the generalization to any cyclotomic polynomial, we show that by applying the function

$$\tau: \mathfrak{R}_{q,\Phi_{\alpha \cdot \mu^{\xi}}} \rightarrow \left[\mathfrak{R}_{q,\Phi_{\alpha}}\right]^{\mu^{\xi}}$$ to a $\text{LUT} \in \mathfrak{R}_{q,\Phi_{\alpha \cdot \mu^{\xi}}}$, a lookup table with polynomials modulus $\Phi_{\alpha \mu^{\xi}}$, where $\Phi_{\alpha \mu^{\xi}}$

is the $\alpha \mu^{\xi}$ cyclotomic polynomial, we can split this LUT into $\mu^{\xi}$ lookup tables with polynomial modulus $\Phi_{\alpha}$, denoted as $\text{lut}_i$, with $i \in [0, \mu^{\xi})$. We obtain that $\tau(\text{LUT}) = [\text{lut}_0, \cdots \text{lut}_{\mu^{\xi}-1}]$.

After the last CMuxes of the blind rotation, the sample extraction is performed only on the lookup table $\text{lut}_0$. So, only one of the $\mu^{\xi}$ CMuxes operations needs to be computed, the one that returns the first split lut ($\text{lut}_0$). This insight can be pushed further: during the extended blind rotation, only the CMuxes operations that impact the output of the last CMux need to be computed.

The idea is then to perform a backward tracing of the full blind rotation, to identify which external products are necessary to obtain the correct result. Indeed, we have seen that a rotation $r$ of $\tau(\text{LUT})$ can be expressed as changing the

index of $\text{lut}_i$ plus a rotation such that $\tau(\text{LUT} \cdot X^r) = [\text{lut}'_0, \cdots \text{lut}'_{\mu^{\xi}-1}]$ where $\text{lut}'_i = \text{lut}_{[(i-r)]_{\mu^{\xi}}} \cdot X^{\left\lceil \frac{r-i}{\mu^{\xi}} \right\rceil}$ for $i \in [0, \mu^{\xi})$. By

examining the rotation by $a_j$, we show that if $a_j = 0 \bmod \mu^{\xi}$, $\text{lut}'_0$ only corresponds to a rotation of $\text{lut}_0$. Similarly, if $a_j = 0 \bmod \mu^{\xi-1}$, $\text{lut}'_0$ corresponds either to a rotation of $\text{lut}_0$ or a rotation of $\text{lut}_{\mu^{\xi}-1}$. Finally, when $a_j \neq 0 \bmod \mu$, $\text{lut}'_0$ can correspond to a rotation of any lut. This implies that the first rotations by all the $a_j \neq 0 \bmod \mu$ require $\mu^{\xi}$ CMuxes. The subsequent rotations for $a_j$ values such that $a_j \neq 0 \bmod \mu^2$ need $\mu^{\xi-1}$ CMuxes, and so on. The final rotations require only one CMux. This results in a CMux tree, where at each step, the number of CMuxes operations is divided by $\mu$. In comparison, the usual approach would require $\mu^{\xi}$ CMuxes for each $a_j$. The proposed idea is then to sort the $a_j$ to construct a CMux tree that minimize the number CMuxes operations needed. We refer to this method as Sorted Programmable Bootstrapping **(S-PBS).**

Figure 3 is a representation of the chain of CMuxes during the blind rotation of the bootstrapping. Horizontal lines represent ciphertexts, and rectangles correspond to CMuxes.

Figure 4 is a representation of the chain of CMuxes during the blind rotation of a sorted blind rotation. Lines represent ciphertexts, and rounded rectangles correspond to CMuxes. The bootstrapping operates with smaller polynomials for an equivalent bootstrapping.

We summarize the gains achieved by comparing computational complexities in Table 1, where we compare the number of external products and the size of the polynomial multiplications required to perform a PBS for each method.

**Modifying the Modulus Switch**

When computing a **S-PBS,** the largest number of external products required in a single step occurs when the rotation satisfies $a_j \neq 0 \bmod \mu$. To minimize this number of CMuxes, we propose a modification in the way the modulus switch operation is computed for such $a_j$.

The idea is to take the opposite rounding operation of all (or part of) the $a_j$ such that $a_j \neq 0 \bmod \mu$, i.e., if the rounding operation is equivalent to a floor, we take the ceiling, else the other way around. Among these modified values $a_j'$, we choose a given number of values such that $a_j' = 0 \bmod \mu^i$ for $i \in [1, \xi]$. The idea is not necessarily to take all the values in order to limit the additional noise added in comparison of computing the usual modulus switch. This introduces a new fine-grained parameter that optimizes the number of CMuxes to compute while limiting noise growth. It is important to note that only the first layer of $a_j$ needs to be considered to maximize the efficiency of this approach. As before, we summarize the theoretical gains of this method in Table 1.

**More parallelism for less latency**

The idea is pretty simple and consists in combining approaches from (Bourse et al. 2018; Z. Li et al. 2024). It stems from developing the original CMux equation to mix and match the rotations done through the keys, and the sorted bootstrapping. To compute a **PBS** using the two combined techniques, instead of computing $n$ sequential CMuxes over polynomials of size $\eta \cdot N$, we can compute a **PBS** in the equivalent of $\frac{n}{k_{\mathrm{CMux}}}$ sequential CMuxes by using $\eta \cdot 2^{k_{\mathrm{CMux}}}$ threads.

Comparison of the state of the art with the different methods proposed in this work. $n$ corresponds to the LWE dimension, $\eta = \mu^{\xi}$ is the extended factor, $N$ is the polynomial size and $d$ corresponds to the number of modified $a_i$ during the CMS. The given values correspond to the one used for 8 bits precision with $P_{\mathrm{fail}} = 2^{-128}$, $\eta = 2^5$ and $d = 137$ .

Table 1.

| | External Product | | Polynomial Size | |
|---|---|---|---|---|
| PBS (Chillotti, Joye, and Paillier 2021) | $n$ | 1113 | $N \cdot \mu^{\xi}$ | 65536 |
| EBS (K. H. Lee and Yoon 2023) | $n \cdot \mu^{\xi}$ | 30816 | $N$ | 2048 |
| This Work Sorted EBS | $n\left(\mu^{-\xi} + (1-\mu^{-1})\dfrac{\mu^{\xi}-\mu^{-\xi}}{1-\mu^{-2}}\right)$ | 20554 | $N$ | 2048 |
| This Work Sorted EBS+ CMS (Average case) | $n\left(\mu^{-\xi} + (1-\mu^{-1})\dfrac{\mu^{\xi}-\mu^{-\xi}}{1-\mu^{-2}}\right)$ $-d\left(\mu^{\xi} - (1-\mu^{-1})\dfrac{\mu^{\xi-1}-\mu^{-\xi+1}}{1-\mu^{-2}}\right.$ $\left. +\dfrac{\mu}{\eta}\right)$ | 18278 | $N$ | 2048 |
| This Work Sorted EBS+ CMS (Best case) | $n\left(\mu^{-\xi} + (1-\mu^{-1})\dfrac{\mu^{\xi}-\mu^{-\xi}}{1-\mu^{-2}}\right)$ $- d(\mu^{\xi}-1)$ | 16968 | $N$ | 2048 |

A new method to compute the **EBS** is proposed herein, which in a parallelized context, frees up threads during the computation, and even in a sequential context provides significant speedup compared to a classical **PBS** or the **EBS.** In an embodiment, the $a_i$ mask coefficients of the input LWE ciphertext of the **PBS** are sorted. By performing this sorting, some of the CMuxes can be removed during the computation of the blind rotation. This new **PBS** is called **S-PBS** for Sorted Extended Bootstrapping.

At the end of a bootstrapping, one only needs to sample extract the coefficients $a_i$ corresponding to the unknown coefficients of the secret key involved in the encryption of $b_0$. When we apply the function $\tau$ to the lookup table ($\tau(\mathrm{LUT}) = (\mathrm{lut}_0, \cdots, \mathrm{lut}_{\eta-1})$) the $a_i$ coefficients involved in the encryption of $b_0$ with unknown coefficients of secret key are only the coefficients of the first lookup table $\mathrm{lut}_0$. In the case of the extended LUT, at the $i^{th}$ step, we compute

$(\mathrm{LUT} \cdot X^{a_i} - \mathrm{LUT}) \boxdot \mathrm{GGSW}_{\mathbf{S}_{\mathrm{ext}}}(s_i) + \mathrm{LUT}$ . By using the $\tau$ function, it is equivalent to compute

$\left(\mathrm{lut}'_j - \mathrm{lut}_j\right) \boxdot \mathrm{GGSW}_{\mathbf{S}}(s_i) + \mathrm{lut}_j$ for j $\in [0,\eta)$ where $\mathrm{lut}_j' = \mathrm{lut}_{[(j-a_i)]_\eta} \cdot X^{\left\lceil \frac{a_i-j}{\eta}\right\rceil}$ . Therefore, as with the sample extract, only the result of $\mathrm{lut}_0$ matters, we only need to compute the CMux outputting $\mathrm{lut}_0$.

First, we notice that the CMuxes can be computed in any order without impacting the result, as long as the $a_i$ rotation is performed with the corresponding GGSW encrypting $s_i$. This comes from the linear part of the decryption, i.e., the dot product between $\mathbf{s}$ and $\mathbf{a}$. So, to perform the blind rotation, we can sort the input pairs ($a_i$, GGSW($s_i$)) in any specific

order.

This observation can be generalized to the other steps of the CMux during the blind rotation.

**Preliminary arithmetic results**

First, we introduce some arithmetic results that will be used to prove the correctness of the **S-PBS.**

Let $\eta \in \mathbb{Z}$. Let $\mu$ be a divisor of $\eta$. For $a \in \mathbb{Z}$, *for* $i \in [0, \eta)$ if a = 0 mod $\mu$ and $i$ - $a$ = 0 mod $\eta$ then i = 0 mod $\mu$.

Proof. Let $\mu, \eta \in \mathbb{Z}$ such that $\mu | \eta$. Let $a \in \mathbb{Z}$, such that $a$ = 0 mod $\mu$, so it exists $k \in Z$ such that $a = k\mu$. Let $i$ - $a$ = 0 mod $\eta$, so it exists a $p \in \mathbb{Z}$ such that i - a = p$\eta$. We have:

$$i - a = p\eta \Leftrightarrow i - k\mu = p\mu \frac{\eta}{\mu} \Leftrightarrow i = k\mu + p\frac{\eta}{\mu}\mu = \mu \left( k + p\frac{\eta}{\mu} \right) \ \square$$

We have that if $a$ = 0 mod $\mu$, a rotation by such $a$, only the $\text{lut}_i$ with i = 0 mod $\mu$ can have an impact on the $\text{lut}_0$. All other lookup tables have no direct impact on $\text{lut}_0$ during this step of the rotation. However, without any modifications, we still need to compute the rotations on all the lookup tables, as they may affect $\text{lut}_0$ in subsequent rotation steps.

Let $\eta$ be the expansion factor such that $\eta = \prod_i \eta_i^{\xi_i}$ for $\xi_i \in \mathbb{N}$ and $\eta_i \in \mathbb{N}$. We denote $\mu^\xi > 1$ as a fixed divisor of $\eta$.

Let $\eta$ be the expansion factor and $\mu^\xi > 1$ a fixed divisor of $\eta$ as defined above. Let an LWE ciphertext $(a_0, \cdots, a_{n-1}, b)$, we denote $a_k$ the set containing the $a_i$ such that $a_i$ = 0 mod $\mu^k$ and $a_i \neq 0$ mod $\mu^{k+1}$ for $k \in [0, \xi)$, and we denote $a_\xi$ the set containing the $a_i$ such that $a_i$ = 0 mod $\mu^\xi$ and $a_i \neq 0$ mod $\eta$. Finally, we note $a_\eta$ the set containing the $a_i$ such that $a_i$ = 0 mod $\eta$. Note that each $a_i$ belongs to only one of the sets a, and moreover, if $\mu^\xi = \eta$, $a_\xi$ is empty.

Sorted-Extended Bootstrapping **(S-PBS)**

In this section, we explain how to sort the LWE ciphertext input coefficients of **S-PBS.** Each coefficient will be sorted into a set a, and we will then compute only the necessary CMuxes for each of these a by starting with $a_0$, then $a_1$, and so on until $a_\eta$. This sorting maximizes the number of removed CMuxes. We first introduced the new Sorted Extended Bootstrapping **(S-PBS)** in Algorithm A. We then prove the correctness of this algorithm and determine the average gain achieved by the proposed method.

**Algorithm A**

Context:
$$\Phi_\alpha = \sum_{i=0}^{N} \phi_i X^i \text{ the } \alpha^{th} \text{ cyclotomic polynomial}$$
$$\vec{s} = [s_0 \cdots s_{n-1}] \subseteq \mathbb{Z}_q^n$$
$$\text{BSK}_i \in \text{GGSW}_{\vec{s}}^{\beta,\ell}(s_i) \subseteq \mathfrak{R}_{q,\Phi_\alpha}^{(k+1)\ell \times (k+1)}$$
$\mu$ such that its prime factors divide $\alpha$, and $\eta = \mu^\xi$

$\vec{S}_{\text{ext}}$ is the extended secret key form $\vec{S} \in \mathfrak{R}_{q,\Phi_\alpha}^k$
$$i.e., \ \vec{S}_{\text{ext}} \leftarrow \iota(\vec{S})$$
$$\tau : \mathfrak{R}_{q,\Phi_{\alpha\eta}} \mapsto \mathfrak{R}_{q,\Phi_\alpha}^\eta$$

Input:
$$\text{BSK} = (\text{BSK}_0, \cdots \text{BSK}_{n-1}) \in \left[\text{GGSW}_{\vec{s}}^{\beta,\ell}\right]^n \subseteq \left[\mathfrak{R}_{q,\Phi_\alpha}^{(k+1)\ell \times (k+1)}\right]^n$$
$$\text{ct}_m = (a_0, \cdots, a_{n-1}, b) \in \text{LWE}_{\vec{s}} \subseteq \mathbb{Z}_q^{n+1}$$
$$\text{LUT}_f \in \text{GLWE}_{\vec{s}_{\text{ext}}} \subseteq \mathfrak{R}_{q,\Phi_{\alpha\eta}}^{(k+1)\ell \times (k+1)}$$

Output: $\text{ct}_{f(m)} = (a_0^{\text{out}}, \cdots, a_{kN-1}^{\text{out}}, b)) \in \text{LWE}_{\vec{s}_{\text{out}}} \subseteq \mathbb{Z}_q^{kN+1}$

Instructions:

$$\text{ct}_{\textbf{MS}} = (\tilde{a}_0, \cdots \tilde{a}_{n-1}, \tilde{b}) \leftarrow \textbf{MS}(\text{ct}_m, \alpha \cdot \eta)$$

$$\vec{a}_0 = \vec{a}_1 = \cdots = \vec{a}_\xi = \varnothing$$

$$\overrightarrow{\text{BSK}'}_0 = \overrightarrow{\text{BSK}'}_2 = \cdots = \overrightarrow{\text{BSK}'}_\xi = \varnothing$$

For $i$ in $[0, n-1]\{$

$$j \leftarrow 1$$

$$\text{While } \tilde{a}_i = 0 \bmod \mu^j \text{ and } j \leq \xi \{$$

$$j \leftarrow j + 1$$

$$\}$$

$$\vec{a}_{j-1} \leftarrow \text{append}(\vec{a}_{j-1}, \tilde{a}_i)$$

$$\overrightarrow{\text{BSK}'}_{j-1} \leftarrow \text{append}(\overrightarrow{\text{BSK}'}_{j-1}, \text{BSK}_i)$$

$$\}$$

$$\text{CT}_{\text{BR}} \leftarrow \text{LUT}_f \cdot X^{\tilde{b}}$$

$$[\text{CT}_{\text{BR}}^0, \cdots, \text{CT}_{\text{BR}}^{\eta-1}] \leftarrow \tau(\text{CT}_{\text{BR}})$$

$$\text{For } i \text{ in } [0, \xi] \{$$

$$\text{For } j \text{ in } [0, \text{len}(\vec{a}_i)) \{$$

$$\text{For } k \text{ in } \left[0, \frac{\eta}{\mu^i} - 1\right] \{$$

Each step of the loop can be done in parallel

$$\text{CT}_{\text{BR}}^{k \cdot \mu^i} \leftarrow \text{CMux}\left(\text{CT}_{\text{BR}}^{k \cdot \mu^i}, \text{CT}_{\text{BR}}^{\left[k \cdot \mu^i - \vec{a}_i[j]\right]_\eta} \cdot X^{\left\lfloor \frac{\vec{a}_i[j] - k \cdot \mu^i}{\eta} \right\rceil}, \text{BSK}_i'[j]\right)$$

$$\}$$

$$\}$$

$$\}$$

$$\text{ct}_{f(m)} \leftarrow \mathbf{SampleExtract}(\text{CT}_{\text{BR}}^0)$$

Let $\eta$ be an expansion factor of the $\alpha^{\text{th}}$ cyclotomic polynomial and $\mu^\xi > 1$ a fixed divisor of $\eta$ as defined above. Let $(\tilde{a}_0, \cdots, \tilde{a}_{n-1}, \tilde{b})$ be an LWE ciphertext obtained after a **MS**, where the $\tilde{a}_i$ are sorted by their congruence into $a_k$ for $k \in [0, \xi] \cup \{\eta\}$ as defined in Definition above. By using Algorithm A, we reduce the number of external product performed compared to the **EBS** without impacting the correctness. On average, since the $a_i$ are uniformly distributed, only

$$n\left(\eta^{-1} + (1 - \mu^{-1})\eta \frac{1 - \mu^{-2(\xi+1)}}{1 - \mu^{-2}}\right) \quad \text{CMuxes need to computed when } \mu^\xi \neq \eta \text{ and}$$

$$n\left(\mu^{-\xi} + (1 - \mu^{-1})\frac{\mu^\xi - \mu^{-\xi}}{1 - \mu^{-2}}\right) \text{ CMuxes when } \eta = \mu^\xi.$$

Correctness of Algorithm A. We will focus primarily on the blind rotation, since the sample extract and the modulus switch remain unchanged. We recall that, at the end of the **PBS,** the sample extract is only done on the first split lookup table (lut$_0$), so the blind rotation only need to compute the external products which impact this lut. As seen, a rotation in split lookup tables ([lut$_0$, $\cdots$, lut$_{\eta-1}$]) can be represented as a change of index plus a small inner rotation. The change of index of the lut$_i$ for a rotation $\tilde{a}$ can be expressed as lut$_{[(i-\tilde{a})]_\eta}$. For this proof, we only need to focus on the indices of the lut that impact lut$_0$ based on the congruence $a_k$ for $k \in [0, \mu] \cup \eta$. We have that when $\tilde{a}$ is in $a_k$ for $k \in [0, \mu]$, we have $\tilde{a} = 0 \bmod \xi^k$, $\tilde{a} \neq 0 \bmod \xi^{k+1}$ and $\tilde{a} = 0 \bmod \eta$ when $\tilde{a}$ is in $a_\eta$.

Only the lut indices $i = 0 \bmod \xi^k$ have an impact on lut$_0$ when the rotation is $\tilde{a} = 0 \bmod \xi^k$. Moreover, when moving the next congruence $a_{k+1}$, only the indices $i = 0 \bmod \xi^{k+1}$ impact lut$_0$ and $\{i \in [0, \eta) | i = 0 \bmod \xi^{k+1}\} \subset \{i \in [0, \eta) | i = 0 \bmod \xi^k\}$. Thus, when transitioning from $a_k$ to $a_{k+1}$, we only remove some of the lut without adding previously removed lut. This ensures that we only perform the necessary operations during the blind rotation without impacting correctness. $\square$

Cost of Algorithm A. The $a_i$ are uniformly distributed for $i \in [0, n-1]$ and sorted into sets $a_k$, for $k \in [0, \xi]$. When $\tilde{a}$ is in

$a_k$ for $k \in [0, \xi)$, only $\eta/\mu^k$ external products need to be computed, and only one when $\tilde{a}$ is in $a_\eta$. Indeed, there are only $\eta/\mu^k$ indices i in $[0, \eta)$ such that i = 0 mod $\mu^k$. On average, $\left(1 - \frac{1}{\mu}\right) \cdot n$ elements are in $a_0$ (and thus there remain $\frac{n}{\mu}$ elements such that $a_i$ = 0 mod $\mu$). For these elements, we need to compute $\eta$ CMuxes at each step of the blind rotation. In the second step, with the $\frac{n}{\mu}$ remaining $a_i$, on average, we have $\mathrm{card}(a_1) = \left(1 - \frac{1}{\mu}\right) \cdot \frac{n}{\mu}$ (and thus there remain $\frac{n}{\mu^2}$ elements such that $a_i$ = 0 mod $\mu$). For the coefficients in $a_1$, we only need to compute $\frac{\eta}{\mu}$ CMuxes at each step of the blind rotation.

We continue this process until the $a_i$ in $a_{\xi-1}$. on this step, there remain $\left(1 - \frac{1}{\mu}\right) \cdot \frac{n}{\mu^{\xi-1}}$ elements that are not equal to zero modulus $\mu^\xi$ and $\frac{n}{\mu^\xi}$ elements such that $a_i$ = 0 mod $\mu$. For these $a_i$, we only need to compute $\frac{\eta}{\mu^{\xi-1}} \cdot \mathrm{CMuxes}$ at each step of the blind rotation. For the $a_i$ in $a_\xi$, there remain $\left(1 - \frac{\mu^\xi}{\eta}\right) \cdot \frac{n}{\mu^\xi}$ elements which are not equal to zero modulus $\eta$ and $\frac{n}{\eta}$ elements such that $a_i$ = 0 mod $\eta$. For these $a_i$, we only need to compute $\frac{\eta}{\mu^\xi}$. CMuxes at each step of the blind rotation.

For the last $\frac{n}{\eta}$ remaining $a_i$ in $a_\eta$, we only need to compute one CMux at each step of the blind rotation.

So we need to compute a total number of CMuxes equal to:

$$\frac{n}{\eta} + \sum_{i=0}^{\xi} \left(1 - \frac{1}{\mu}\right) \frac{n}{\mu^i} \frac{\eta}{\mu^i} = n\left(\eta^{-1} + \left(1 - \frac{1}{\mu}\right)\eta \sum_{i=0}^{\xi} \mu^{-2i}\right)$$
$$= n\left(\eta^{-1} + (1 - \mu^{-1})\eta \frac{1 - \mu^{-2(\xi+1)}}{1 - \mu^{-2}}\right)$$

By applying the same reasoning, when $\eta = \mu^\xi$, we need to compute a total number of CMuxes equal to:

$$\frac{n}{\mu^\xi} + \sum_{i=0}^{\xi-1} \left(1 - \frac{1}{\mu}\right) \frac{n}{\mu^i} \mu^{\xi-i} = n\left(\mu^{-\xi} + \left(1 - \frac{1}{\mu}\right) \sum_{i=0}^{\xi-1} \mu^{\xi-2i}\right)$$
$$= n\left(\mu^{-\xi} + (1 - \mu^{-1})\mu^\xi \sum_{i=0}^{\xi-1} (\mu^{-2})^i\right) = n\left(\mu^{-\xi} + (1 - \mu^{-1})\frac{\mu^\xi - \mu^{-\xi}}{1 - \mu^{-2}}\right) \qquad \square$$

With the Algorithm A, the blind rotation is performed by sorting the mask elements based of their results modulo $\mu^k$ for $k \in [0, \xi)$. By doing so, during the blind rotation, when $\tilde{a}$ is in $a_k$, we only need to compute $\frac{\eta}{\mu^k}$ external products. Indeed, there are only $\frac{\eta}{\mu^k}$ indices i such that $i$ = 0 mod $\mu^k$ with $i \in [0, \eta)$.

In the usual case with $\Phi_{2N}$, where $N$ is a power of two and with and extended factor $2^\xi = \eta$, on average, we only need to compute $\frac{n}{2^\xi} + \sum_{i=0}^{\xi-1} \left(1 - \frac{1}{2}\right)\frac{n}{2^i} 2^{\xi-i} = n \cdot \left(\frac{2\eta^2 + 1}{3\eta}\right)$ CMuxes.

The noise propagation of this algorithm is the same as the noise propagation of the **PBS**. For a fixed precision, when $\eta > 1$, a classical **PBS** operates with polynomials of degree $N\eta$, whereas the **S-PBS** operates with polynomials of degree $N$. As a result, the noise added during the **S-PBS** will be smaller than that of the classical **PBS.**

For the last $a_i$ of each set $a_k$, for $k \in [0, \xi]$, we only need to compute $\eta/\mu^{k+1}$ CMuxes (compared to $\eta/\mu^k$ CMuxes for all the other $a_i$ of the set $a_k$). Indeed, the lut of index $j$ such that $j$ = 0 mod $\mu^k$ and $j \neq 0$ mod $\mu^{k+1}$ will never be used in the following computation (the $a_i$ of the set $a_{k+1}$ work only on the lut of index $j$ such that $j$ = 0 mod $\mu^{k+1}$). By considering this remark, we can reduce the number of CMuxes by

$$\frac{\eta}{\mu}\sum_{i=0}^{\xi-1}\frac{1}{\mu^i} = \eta\,\frac{1-\mu^{-\xi}}{\mu-1}.$$

**New Modulus Switch**

We show that when the mask elements are sorted based on $\alpha_k$ for $k \in [0, \xi) \cup \eta$, Algorithm A allows computing only $\frac{\eta}{\mu^k}$ external product at each step of the blind rotation when the rotation $\tilde{a}$ is in $a_k$. When $\tilde{a}$ is in $a_k$, the higher the value $k$, the more we can reduce the number of external products. An easy way to improve the **S-PBS** is to reduce the number of mask elements in $a_0$ (i.e., when the maximum number of external products needs to be computed at each step of the blind rotation) and maximize the number of mask elements $a$ such that $a \in a_\eta$. To achieve this, we propose modifying the modulus switch by intentionally selecting either the ceiling or floor during the rounding operation. By doing so, for a mask element that would typically be in $a_0$ with the classical modulus switch, selecting the opposite rounding result (i.e., the floor if the rounding returns the ceiling and vice versa) can place the mask element into another $a_k$ for $k \in [1, \xi) \cup \eta$. The goal is to identify mask values where changing the rounding result shifts the value to $a_k$ for a $k$ value close to $\xi$. The drawback of this modification is its impact on the noise. By selecting the ceiling or floor instead of the rounding result, we increase the rounding error added by the modified mask elements.

The modulus switch is already well known to be one of the most noisiest operations, therefore, we cannot arbitrarily change all the elements as desired. To moderate this noise growth, we introduce a new parameter $d$ representing the number of $a_i$ on which this modified modulus switch will be applied. Assuming a fixed failure probability and security level, if the noise increase is too large, cryptographic parameters must also be larger to ensure the previous conditions. This might ruin the performance gain from this optimization. The goal is then to find the best value for $d$ to improve the overall performance.

Currently, as this modulus switch is only used with the **S-PBS,** we refer to it as the Companion Modulus Switch and denote it by CMS.

In this section, we first study the noise evolution of the CMS to ensure the correctness of the whole algorithm. Indeed the output noise of the CMS needs to satisfy the noise constraints for a given failure probability to be correctly applied during the **S-PBS** . We then present the average and the maximum gain offer by this new method.

Let $(a_0, \cdots, a_{n-1}, b)$ be the input LWE ciphertext encrypted under the secret key $(s_0, \cdots, s_{n-1})$. For a chosen $d$, the CMS operation is done by computing $a_i' = \left[\left[\frac{q_{out}}{q_{in}}a_i\right]\right]_{q_{out}}$ $i \in [0, n - d - 1]$ and

$$a_i'' = \left[\left[\frac{q_{out}}{q_{in}}a_i\right]\right]_{q_{out}} + \left[\left[\frac{q_{out}}{q_{in}}a_i\right]\right]_{q_{out}} - \left[\left[\frac{q_{out}}{q_{in}}a_i\right]\right]_{q_{out}}$$ $n - d, n - 1]$. Any of the $a_i$ for the $d$ modified values can be chosen, but to simplify the $d$ last values are taken. The variance of the CMS is:

$$\mathrm{Var}(e_{\mathsf{CMS}}) = \frac{\sigma_{in}^2}{\alpha^2} + \frac{1}{12} - \frac{1}{12\alpha^2} + \frac{d}{16\alpha^2-48\alpha+144}$$
$$+ \frac{n-d}{24} + \frac{(n-d)}{48\alpha^2} + \frac{d\left(7\alpha^4-39\alpha^3+29\alpha^2+90\alpha-72\right)}{24\alpha^2(\alpha-3)^2}$$

and

$$\mathbb{E}(e_{\mathsf{CMS}}) = \frac{1}{2\alpha}\cdot\left(\frac{n-d}{2}-1\right) + \frac{d}{4\alpha-12}$$

With $\alpha = \frac{q_{in}}{q_{out}}$ and $\sigma_{in}^2$ the input noise .

The CMS can be implemented in Algorithm A by substituting the existing modulus switch in line 1 with the new one. We have the correctness of the Algorithm A if the noise added by the CMS is smaller than a given constraint that ensure the correctness of the **S-PBS** with a given failure probability. The Companion Modulus Switch is denoted as: $\mathrm{CT_{out}} \leftarrow \mathrm{CMS}(\mathrm{CT_{in}}, q_{out}, d)$. With the CMS, we reduce the number of CMuxes needed to compute the **BR**. Indeed, we can find the $a_i$ values that require $\eta$ CMuxes and modify them to compute only $\mu^\varphi$ CMuxes with $0 \le \varphi < \xi$. In the best case, we aim for the modified $a_i$ to be congruent to 0 modulo $\eta$, requiring only one CMux to be performed. Due to the CMS, we have fewer coefficients in $a_0$. The next lemma shows, on average, how many CMuxes are removed during the computation of the **S-**

**PBS.**

Let d E Z. By performing Algorithm A with the Companion Modulus Switch CMS($CT_{in}$, $q_{out}$, d) instead of the classical Modulus Switch **MS**($CT_{in}$, $q_{out}$), on the average case, we only need to compute

$$n\left(\eta^{-1} + (1 - \mu^{-1})\eta \frac{1-\mu^{-2(\xi+1)}}{1-\mu^{-2}}\right) - d\left(\eta + \left(\frac{\eta}{\mu} - \frac{\eta}{\mu^2}\right)\frac{1-\mu^{-2\xi}}{1-\mu^{-2}} + \frac{1}{\eta}\right)$$ CMuxes when $\mu^\xi \neq \eta$ and

$$n\left(\mu^{-\xi} + (1 - \mu^{-1})\frac{\mu^\xi - \mu^{-\xi}}{1-\mu^{-2}}\right) - d\left(\mu^\xi - (1 - \mu^{-1})\frac{\mu^{\xi-1} - \mu^{-\xi+1}}{1-\mu^{-2}} + \frac{1}{\eta}\right)$$ CMuxes when $\mu^\xi = \eta$. In the best case, where all the modified values satisfy $a_i$ = 0 mod $\eta$, we only need to compute

$$n\left(\mu^{-\xi} + (1 - \mu^{-1})\frac{\mu^\xi - \mu^{-\xi}}{1-\mu^{-2}}\right) - d(\eta - 1)$$ CMuxes.

The proof follows the same idea as above. We saw that we need to compute

$$n\left(\eta^{-1} + (1 - \mu^{-1})\eta \frac{1-\mu^{-2(\xi+1)}}{1-\mu^{-2}}\right)$$ CMuxes to perform a blind rotation. With the CMS, we choose $d$ values $a_i$ in $a_0$ and we modify them to obtain $a_j a_k$ for some $k \in [1, \xi] \cup \{\eta\}$. As we modify $d$ values, we need to subtract the $d \cdot \eta$ CMuxes computed with the original $a_i$ and add the new CMuxes performed with the $d$ modified values to the total number of CMuxes.

For these $d$ new $a_i$, on average, there are $\left(1 - \frac{1}{\mu}\right)d$ new $a_i$ such that $a_i$ is in $a_1$. For these $a_i$, we need to compute $n/\mu$ CMuxes. After this step, there remain $\frac{1}{\mu^\xi}d$ values and from these values, we have $\left(1 - \frac{1}{\mu}\right)\frac{1}{\mu^\xi}d$ values such that $a_i \in$ $a_2$. For these $a_i$, we only need to compute $\eta/\mu^2$ CMuxes, and so on until $a_i \in a_\xi$ where we need to compute $\frac{\eta}{\mu^\xi}$ CMuxes at each step of the blind rotation. For the $a_i$ in $a_\eta$ we only need to compute one CMux

$$n\left(\eta^{-1} + (1 - \mu^{-1})\eta \frac{1-\mu^{-2(\xi+1)}}{1-\mu^{-2}}\right) - d\eta + \sum_{i=0}^{\xi-1}\left(1 - \frac{1}{\mu}\right)\frac{d}{\mu^i}\frac{\eta}{\mu^{i+1}} + \frac{d\mu}{\eta}$$

$$\overset{\smile}{I}$$

$$= I - d\eta + \left(1 - \frac{1}{\mu}\right)\frac{d\eta}{\mu}\sum_{i=0}^{\xi-1}\mu^{-2i} + \frac{d}{\eta} = I - d\eta + \left(1 - \frac{1}{\mu}\right)\frac{d\eta}{\mu}\frac{1-\mu^{-2\xi}}{1-\mu^{-2}} + \frac{d\mu}{\eta}$$

$$= I - d\left(\eta - \left(\frac{\eta}{\mu} - \frac{\eta}{\mu^2}\right)\frac{1-\mu^{-2\xi}}{1-\mu^{-2}} - \frac{\mu}{\eta}\right)$$

By applying the same reasoning, when $\eta = \mu^\xi$, we need to compute a total number of CMuxes equals at:

$$n\left(\mu^{-\xi} + (1 - \mu^{-1})\frac{\mu^\xi - \mu^{-\xi}}{1-\mu^{-2}}\right) - d\mu^\xi + \sum_{i=0}^{\xi-2}\left(1 - \frac{1}{\mu}\right)\frac{d}{\mu^i}\mu^{\xi-1-i} + \frac{d\mu}{\eta}$$

$$\overset{\smile}{I}$$

$$= I - d\mu^\xi + \left(1 - \frac{1}{\mu}\right)d\sum_{i=0}^{\xi-2}\mu^{\xi-1-2i} + \frac{d\mu}{\eta}$$

$$= I - d\mu^\xi + \left(1 - \frac{1}{\mu}\right)d\mu^{\xi-1}\sum_{i=0}^{\xi-2}(\mu^{-2})^i + \frac{d\mu}{\eta}$$

$$= I - d\mu^\xi + (1 - \mu^{-1})d\mu^{\xi-1}\frac{1-\mu^{-2\xi+2}}{1-\mu^{-2}} + \frac{d\mu}{\eta}$$

In the best case, all the d modified $a_i$ belong to $a_\eta$. So, at each step of the blind rotation, only one CMux is required to perform what previously needed $\eta$ CM uxes. □

More Parallelism for the **EBS**

Here, we present a method to parallelize multiple sequential CMuxes for the **S-PBS** or the **EBS** by using GGSW ciphertexts that encrypting only integers. The goal is to parallelize multiples sequential CMuxes, and at each step, we use the **EBS** to further parallelize each external product.

First, as in (Bourse et al. 2018; Z. Li et al. 2024), we observe that two consecutive CMuxes of a LUT E GLWE by the rotations $a_0$ and $a_1$ associated respectively with $BSK_{s0}$ and $BSK_{s1}$ are computed by the following formula:

$$\left((\text{LUT} \cdot X^{a_0} - \text{LUT}) \boxdot \text{BSK}_{s_0} + \text{LUT}\right) \boxdot \text{BSK}_{s_1}$$

$$+ \left((\text{LUT} \cdot X^{a_0} - \text{LUT}) \boxdot \text{BSK}_{s_0} + \text{LUT}\right) = \text{LUT} \cdot X^{a_0 s_0 + a_1 s_1}$$

With $\text{BSK}_{s_i} \in \text{GGSW}_{\vec{s}}^{\beta,\ell}(s_i)$ for i ∈ {0,1}. This equation can be rewritten like:

$$\text{LUT} \boxdot \text{BSK}_{(1-s_0)(1-s_1)} + (\text{LUT} \cdot X^{a_0}) \boxdot \text{BSK}_{(s_0)(1-s_1)}$$

$$+(\text{LUT} \cdot X^{a_1}) \boxdot \text{BSK}_{(1-s_0)(s_1)} + (\text{LUT} \cdot X^{a_0+a_1}) \boxdot \text{BSK}_{(s_0)(s_1)}$$

$$= \text{LUT} \cdot X^{a_0 s_0 + a_1 s_1}$$

With $\text{BSK}_{(1-s_0)(1-s_1)} \in \text{GGSW}_{\vec{s}}^{\beta,\ell}\left((1 - s_0)(1 - s_1)\right)$, $\text{GGSW}_{\vec{s}}^{\beta,\ell}\left((s_0)(1 - s_1)\right)$, and $\text{BSK}_{(1-s_0)(s_1)} \in \text{GGSW}_{\vec{s}}^{\beta,\ell}\left((1 - s_0)(s_1)\right)$, $\text{BSK}_{(s_0)(s_1)} \in \text{GGSW}_{\vec{s}}^{\beta,\ell}\left((s_0)(s_1)\right)$

Compared to two sequential CMuxes, this operation requires twice as many CMuxes as the previous equation. However, compared to sequential CMuxes where two CMuxes must be executed sequentially, these four CMuxes can all be performed in parallel. Moreover, each BSK encrypts an integer, allowing each external product to be computed using an **EBS.** Since in a parallel context the **EBS** is faster than a classical **PBS,** this parallelization becomes even more efficient. By generalizing this idea, we obtain the following lemma:

Let $k_{\text{CMux}}$ the number of CMuxes performed in parallel with the secret keys {$s_0, \cdots, s_{k_{\text{CMux}}-1}$}. Let $\mathfrak{S}$ be the set {0, $\cdots, k_{\text{CMux}}$ - 1}. For each subset $\mathfrak{s}_r \subseteq \mathfrak{S}$, we define the bootstrapping key $\text{BSK}_{\mathfrak{s}_r}$ which encrypts the secret value $\Pi_{j \in \mathfrak{s}_r} s_j \Pi_{i \in \mathfrak{S} \backslash \mathfrak{s}_r}(1 - s_i)$ for r ∈ [0, $2^{k_{\text{CMux}}}$ - 1]. So to perform $k_{\text{CMux}} \cdot$ CMuxes in parallel, we need to have $2^{k_{\text{CMux}}}$ BSK. A rotation of an GLWE by $X^{\sum_{i=0}^{k_{\text{CMux}}-1} a_i \cdot s_i}$ for any integer $a_i$ can be computed using the following formula:

$$\sum_{r=0}^{2^{k_{\text{CMux}}}-1} \text{GLWE} \cdot X^{\sum_{i \in \mathfrak{s}_r} a_i} \boxdot \text{BSK}_{\mathfrak{s}_r} = \text{GLWE} \cdot X^{\sum_{i=0}^{k_{\text{CMux}}-1} a_i \cdot s_i}$$

Proof. The product $\Pi_{j \in \mathfrak{s}_r} s_j$ equals one only if all the secret keys $s_j$ for $j \in \mathfrak{s}_r$, are equal to one. The product $\Pi_{i \in \mathfrak{S} \backslash \mathfrak{s}_r}(1 - s_i)$ equals to one only if all the secret keys $s_i$ for $i \in \mathfrak{S} \backslash \mathfrak{s}_r$ are equal to zero. There exists only one subset $\mathfrak{s}_r$ such that all the secret keys equal to one are represented and no secret keys equal to zero are represented. Thus, the subset $\mathfrak{S} \backslash \mathfrak{s}_r$ to 0. Let us denote this subset $\mathfrak{s}$ With this subset, we have $\Pi_{j \in \mathfrak{s}} s_j \Pi_{i \in \mathfrak{S} \backslash \mathfrak{s}}(1 - s_i)$ one. All the other products with the other subsets will be equal to zero. The product $\Pi_{j \in \mathfrak{s}} s_j \Pi_{i \in \mathfrak{S} \backslash \mathfrak{s}}(1 - s_i)$ $\sum_{j \in \mathfrak{s}} a_j$, which corresponds to the $a_j$ where the secret keys are equal to one. So $\text{GLWE} \cdot X^{\sum_{i \in \mathfrak{s}} a_i} \boxdot \text{BSK}_{\mathfrak{s}}$ $\text{GLWE} \cdot X^{\sum_{i=0}^{k_{\text{CMux}}-1} a_i \cdot s_i}$ all the other products will return a ciphertext encrypting zero. □

The previous operation is done by performing $k_{\text{CMux}}$ operations in parallel between a $\text{GLWE}_{\vec{s}}$ ciphertext encrypted with a noise variance $\sigma_{\text{GLWE}}$ and a bootstrapping key $\text{BSK} \in \text{GGSW}_{\vec{s}}^{\beta,\ell}$ encrypting a secret key under a noise variance $\sigma_{\text{GGSW}}$. Next, we sum all the result. We know that only one of the secret keys $\text{BSK}_{\mathfrak{s}_r}$ $k_{\text{CMux}}$), is equal to one. So for the bootstrapping key that is equal to one we have the following noise variance:

$$\text{Var}(e_{EP}) = \ell(k + 1)N \frac{\beta^2 + 2}{12} \sigma_{\text{GGSW}}^2 + \frac{\sigma_{\text{GLWE}}^2}{2} + \frac{1}{16}\left(1 - kN\mathbb{E}(s_i)\right)^2$$

$$+ \frac{q^2 - \beta^{2\ell}}{24\beta^{2\ell}}\left(1 + kN\left(\text{Var}(s_i) + \mathbb{E}^2(s_i)\right)\right) + \frac{kN}{8}\text{Var}(si)$$

And for the other external product, where the encrypted secret keys equal zero, we have the noise variance:

$$\text{Var}\left(e_{EP_{\text{BSK}(0)}}\right) = \ell(k+1)N\frac{\beta^2+2}{12}\sigma_{\text{GGSW}^2} + \frac{\sigma_{\text{GLWE}}^2}{2} + \frac{1}{16} + \frac{q^2-\beta^{2\ell}}{24\beta^{2\ell}}$$

So, the noise variance of $k_{\text{CMux}}$ parallel CMuxes is:

$$\text{Var}(e) = \text{Var}(e_{EP}) + \sum_{i=1}^{2^{k_{\text{CMux}}}-1}\text{Var}\left(EP_{\text{BSK}(0)}\right)$$

$$= 2^{k_{\text{CMux}}}\ell(k+1)N\frac{\beta^2+2}{12}\sigma_{\text{GGSW}}^2 + \frac{2^{k_{\text{CMux}}}\sigma_{\text{GLWE}}^2}{2} + \frac{1}{16}\left(1 - kN\mathbb{E}(s_i)\right)^2$$

$$+ \frac{q^2-\beta^{2\ell}}{24\beta^{2\ell}}\left(2^{k_{\text{CMux}}} + kN\left(\text{Var}(s_i) + \mathbb{E}^2(s_i)\right)\right) + \frac{kN}{8}\text{Var}(si) + 2^{k_{\text{CMux}}-4}$$

With $k_{\text{CMux}}$ dividing n, to perform a bootstrapping with $k_{\text{CMux}}$ parallel CMuxes at each step of the blind rotation, we need to split the set of n secret keys into $n/k_{\text{CMux}}$ distinct subsets. For each of these subsets, we can create BSKs as in the proof above. By using $\eta k_{\text{CMux}}$ threads, we can perform a **EBS** in only $n/k_{\text{CMux}}$ sequential groups of CMuxes over polynomials of size N instead of $n$ CMuxes over polynomials of size $\eta N$ with one classical **PBS** over one thread.

With $k_{\text{CMux}}$ dividing n, the output noise variance of a parallelized **EBS** between a noiseless input lookup table LUT

E $\text{GLWE}_{\tilde{s}}^2$ and the $2^{k_{\text{CMux}}} \cdot \dfrac{n}{k_{\text{CMux}}}$ bootstrapping key $\text{BSK} \in \text{GGSW}_{\tilde{s}}^{\beta,\ell}$ ciphertexts encrypting the binary secret as defined above, under the noise variance $\sigma_{\text{BSK}}$ is:

$$\text{Var}(e) = \frac{n}{k_{\text{CMux}}}2^{k_{\text{CMux}}}\ell(k+1)N\frac{\beta^2+2}{12}\sigma_{\text{GGSW}}^2 + \frac{n\cdot 2^{k_{\text{CMux}}}\sigma_{\text{GLWE}}^2}{2k_{\text{CMux}}} + \frac{n}{16k_{\text{CMux}}}\left(1 - kN\mathbb{E}(s_i)\right)^2$$

$$+ \frac{kNn}{8k_{\text{CMux}}}\text{Var}(si) + \frac{n2^{k_{\text{CMux}}-4}}{k_{\text{CMux}}} + \frac{n}{k_{\text{CMux}}}\frac{q^2-\beta^{2\ell}}{24\beta^{2\ell}}\left(2^{k_{\text{CMux}}} + kN\left(\text{Var}(s_i) + \mathbb{E}^2(s_i)\right)\right)$$

**More Parallelism for the S-PBS**

In the previous section, we have seen how to parallelize groups of CMux in a bootstrapping **EBS.** Above, we introduced the **S-PBS.** Here, we will see how to sort the $a_i$ to parallelize the CMuxes and maximize the advantage offered by the sorting.

Let $\eta$ be the expansion factor and $\mu^\xi > 1$ be a fixed divisor of $\eta$ as defined above. Let $(\tilde{a}_0, \cdots, \tilde{a}_{n-1}, \tilde{b})$ be an LWE ciphertext obtained after an **MS.** Let $k_{\text{CMux}}$ be the number of CMuxes performed in parallel.

Let us sort the $\tilde{a}_i$ by their congruence in $a_k$ for k $\in [0, \xi]$, as defined above.

To maximize the reduction in the number of CMuxes computed, the parallel CMuxes of the blind rotation may be done with the $\tilde{a}_i$ of the same $a_k$. By taking $\tilde{a}_i$s from different a, we can only reduce the numbers of CMuxes as for the $\tilde{a}_i$ in the a with the smallest $k$.

The blind rotation is done by performing a sorted blind rotation so that some of the CMuxes do not need to be computed, especially when we perform one step of the blind rotation with $\tilde{a}_i \in a_k$ (for k $\in [0, \xi]$), we only need to compute $\mu^{\xi-k}$ CMuxes (compared to $\mu^\xi$ for a classical **EBS**).

Proof. The proof follows the above proof , except that the condition for removing some CMuxes needs to be verified by the $k_{\text{CMux}}$ $\tilde{a}_i$ done in parallel. By applying the same methodology we obtain the following equation:

$$\sum_{i=0}^{\xi}\left(1 - \frac{1}{\mu^{k_{\text{CMux}}}}\right)\left(\frac{1}{\mu^{k_{\text{CMux}}}}\right)^i n2^{k_{\text{CMux}}}\frac{\eta}{\mu^i} + \frac{1}{\eta^{k_{\text{CMux}}}}\left(\frac{1}{\mu^{k_{\text{CMux}}}}\right)^{\xi+1}n2^{k_{\text{CMux}}}$$

$$= 2^{k_{\text{CMux}}}\left[\left(1 - \frac{1}{\mu^{k_{\text{CMux}}}}\right)\eta\frac{1+\mu^{-(k_{\text{CMux}}+1)(\xi+1)}}{1-\mu^{-(k_{\text{CMux}}+1)}} + \eta^{-k_{\text{CMux}}}\mu^{-k_{\text{CMux}}\xi}\right] \quad \square$$

By using the modulus switch, we can drastically increase the probability that $k_{\text{CMux}}$ $a_i$ are on a set a, which permits reducing the number of external products needed to perform the **S-PBS.**

Embodiments provide a highly efficient method improving upon the state of the art. The method is not straightforward: by sorting the elements of the mask before performing the **PBS,** it reduces the number of external products required to compute the blind rotation. Reducing the number of external products in the blind rotation has a direct impact on the execution time of the **PBS,** offering more practical timings for high-precision **PBS.** In addition to this technique, we propose a slight modification to the modulus switch, aimed at further reducing the number of external products during the blind rotation without compromising correctness. Furthermore, we introduce several techniques to parallelize this work.

**References**

Alperin-Sheriff, Jacob, and Chris Peikert. 2014. "Faster Bootstrapping with Polynomial Error." In Advances in Cryptology-CRYPTO 2014: 34th Annual Cryptology Conference, Santa Barbara, CA, USA, August 17-21, 2014, Proceedings, Part i 34, 297-314. Springer.

Bergerat, Loris, Anas Boudi, Quentin Bourgerie, Ilaria Chillotti, Damien Ligier, Jean-Baptiste Orfila, and Samuel Tap. 2022. "Parameter Optimization & Larger Precision for (T)FHE." IACR Cryptol. ePrint Arch., 704. https://eprint.iacr.org/2022/704.

Bergerat, Loris, Ilaria Chillotti, Damien Ligier, Jean-Baptiste Orfila, Adeline Roux-Langlois, and Samuel Tap. 2023. "Faster Secret Keys for (t) FHE." Cryptology ePrint Archive.

Bonte, Charlotte, Ilia Iliashenko, Jeongeun Park, Hilder VL Pereira, and Nigel P Smart. 2022. "Final: Faster Fhe Instantiated with Ntru and Lwe." In International Conference on the Theory and Application of Cryptology and Information Security, 188-215. Springer.

Bourse, Florian, Michele Minelli, Matthias Minihold, and Pascal Paillier. 2018. "Fast Homomorphic Evaluation of Deep Discretized Neural Networks." In Advances in Cryptology-CRYPTO 2018: 38th Annual International Cryptology Conference, Santa Barbara, CA, USA, August 19-23, 2018, Proceedings, Part III 38, 483-512. Springer.

Brakerski, Zvika. 2012. "Fully Homomorphic Encryption Without Modulus Switching from Classical GapSVP." IACR Cryptology ePrint Archive 2012: 78. http://eprint.iacr.org/2012/078.

Brakerski, Zvika, Craig Gentry, and Vinod Vaikuntanathan. 2012. "(Leveled) Fully Homomorphic Encryption Without Bootstrapping." In Innovations in Theoretical Computer Science 2012, Cambridge, MA, USA, January 8-10, 2012, 309-25. http://doi.acm.org/10.1145/2090236.2090262.

Carpov, Sergiu, Malika Izabachène, and Victor Mollimard. 2019. "New Techniques for Multi-Value Input Homomorphic Evaluation and Applications." In Cryptographers' Track at the RSA Conference, 106-26. Springer.

Checri, Marina, Renaud Sirdey, Aymen Boudguiga, and Jean-Paul Bultel. 2024. "On the Practical CPAD Security of 'Exact' and Threshold FHE Schemes and Libraries." Cryptology ePrint Archive.

Cheon, Jung Hee, Hyeongmin Choe, Alain Passelègue, Damien Stehlé, and Elias Suvanto. 2024. "Attacks Against the INDCPA-d Security of Exact FHE Schemes." Cryptology ePrint Archive.

Cheon, Jung Hee, Andrey Kim, Miran Kim, and Yong Soo Song. 2017. "Homomorphic Encryption for Arithmetic of Approximate Numbers." In Advances in Cryptology - ASIACRYPT 2017 - 23rd International Conference on the Theory and Applications of Cryptology and Information Security, Hong Kong, China, December 3-7, 2017, Proceedings, Part I, 409-37. https://doi.org/10.1007/978-3-319-70694-8_15.

Chillotti, Ilaria, Nicolas Gama, Mariya Georgieva, and Malika Izabachène. 2016. "Faster Fully Homomorphic Encryption: Bootstrapping in Less Than 0.1 Seconds." In Advances in Cryptology - ASIACRYPT 2016 - 22nd International Conference on the Theory and Application of Cryptology and Information Security, Hanoi, Vietnam, December 4-8, 2016, Proceedings, Part I, 3-33. https://doi.org/10.1007/978-3-662-53887-6_1.

- 2017. "Faster Packed Homomorphic Operations and Efficient Circuit Bootstrapping for TFHE." In Advances in Cryptology - ASIACRYPT 2017 - 23rd International Conference on the Theory and Applications of Cryptology and Information Security, Hong Kong, China, December 3-7, 2017, Proceedings, Part I, 377-408. https://doi.org/10.1007/978-3-319-70694-8_14.
- 2020. "TFHE: Fast Fully Homomorphic Encryption over the Torus." Journal of Cryptology 33 (1): 34-91.

Chillotti, Ilaria, Marc Joye, Damien Ligier, Jean-Baptiste Orfila, and Samuel Tap. 2020. "CONCRETE: Concrete Operates on Ciphertexts Rapidly by Extending TfhE." In WAHC 2020.

Chillotti, Ilaria, Marc Joye, and Pascal Paillier. 2021. "Programmable Bootstrapping Enables Efficient Homomorphic Inference of Deep Neural Networks." In CSCML 2021. Springer.

Chillotti, Ilaria, Damien Ligier, Jean-Baptiste Orfila, and Samuel Tap. 2021. "Improved Programmable Bootstrapping with Larger Precision and Efficient Arithmetic Circuits for Tfhe." In International Conference on the Theory and Application of Cryptology and Information Security, 670-99. Springer.

Conrad, Keith. 2015. "Cyclotomic Extensions." Preprint.

Ducas, Léo, and Daniele Micciancio. 2015. "FHEW: Bootstrapping Homomorphic Encryption in Less Than a Second." In Advances in Cryptology - EUROCRYPT 2015 - 34th Annual International Conference on the Theory and Applications of Cryptographic Techniques, Sofia, Bulgaria, April 26-30, 2015, Proceedings, Part I, 617-40. https://doi.org/10.1007/978-3-662-46800-5_24.

- 2017. "FHEW: A Fully Homomorphic Encryption Library." https://github.com/lducas/FHEW.

Fan, Junfeng, and Frederik Vercauteren. 2012. "Somewhat Practical Fully Homomorphic Encryption." IACR Cryptology ePrint Archive 2012: 144. http://eprint.iacr.org/2012/144.

Gama, Nicolas, Malika Izabachene, Phong Q Nguyen, and Xiang Xie. 2016. "Structural Lattice Reduction: Generalized Worst-Case to Average-Case Reductions and Homomorphic Cryptosystems." In Advances in Cryptology-EUROCRYPT 2016: 35th Annual International Conference on the Theory and Applications of Cryptographic Techniques, Vienna, Austria, May 8-12, 2016, Proceedings, Part II 35, 528-58. Springer.

Gentry, Craig. 2009. "Fully Homomorphic Encryption Using Ideal Lattices." In Proceedings of the 41st Annual ACM Symposium on Theory of Computing, STOC 2009, Bethesda, MD, USA, May 31 - June 2, 2009, 169-78. http://doi.acm.org/10.1145/1536414.1536440.

Gentry, Craig, Shai Halevi, and Nigel P Smart. 2012. "Homomorphic Evaluation of the AES Circuit." In Annual Cryptology Conference, 850-67. Springer.

Gentry, Craig, Amit Sahai, and Brent Waters. 2013. "Homomorphic Encryption from Learning with Errors: Conceptually-Simpler, Asymptotically-Faster, Attribute-Based." IACR Cryptology ePrint Archive 2013: 340. http://eprint.iacr.org/20 13/340.

Guimarães, Antonio, Edson Borin, and Diego F Aranha. 2021. "Revisiting the Functional Bootstrap in TFHE." IACR Transactions on Cryptographic Hardware and Embedded Systems, 229-53.

Hoffstein, Jeffrey, Jill Pipher, and Joseph H Silverman. 2006. "NTRU: A Ring-Based Public Key Cryptosystem." In Algorithmic Number Theory: Third International Symposiun, ANTS-III Portland, Oregon, USA, June 21-25, 1998 Proceedings, 267-88. Springer.

Hong, Deokhwa, Young-Sik Kim, Yongwoo Lee, and Eunyoung Seo. 2024. "A New Fine Tuning Method for FHEW/TFHE Bootstrapping with IND-CPAD Security." Cryptology ePrint Archive.

Joye, Marc, and Pascal Paillier. 2022. "Blind Rotation in Fully Homomorphic Encryption with Extended Keys." In International Symposium on Cyber Security, Cryptology, and Machine Learning, 1-18. Springer.

Joye, Marc, and Michael Walter. 2022. "Liberating TFHE: Programmable Bootstrapping with General Quotient Polynomials." In Proceedings of the 10th Workshop on Encrypted Computing & Applied Homomorphic Cryptography, 1-11.

Langlois, Adeline, and Damien Stehlé. 2015. "Worst-Case to Average-Case Reductions for Module Lattices." Designs, Codes and Cryptography 75 (3): 565-99.

Lee, Changmin, Seonhong Min, Jinyeong Seo, and Yongsoo Song. 2023. "Faster TFHE Bootstrapping with Block Binary Keys." In Proceedings of the 2023 ACM Asia Conference on Computer and Communications Security, 2-13.

Lee, Kang Hoon, and Ji Won Yoon. 2023. "Discretization Error Reduction for High Precision Torus Fully Homomorphic Encryption." In IACR International Conference on Public-Key Cryptography, 33-62. Springer.

Lee, Yongwoo, Daniele Micciancio, Andrey Kim, Rakyong Choi, Maxim Deryabin, Jieun Eom, and Donghoon Yoo. 2023. "Efficient FHEW Bootstrapping with Small Evaluation Keys, and Applications to Threshold Homomorphic Encryption." In Annual International Conference on the Theory and Applications of Cryptographic Techniques, 227-56. Springer.

Li, Baiyu, and Daniele Micciancio. 2021. "On the Security of Homomorphic Encryption on Approximate Numbers." In Annual International Conference on the Theory and Applications of Cryptographic Techniques, 648-77. Springer.

Li, Zhihao, Xianhui Lu, Zhiwei Wang, Ruida Wang, Ying Liu, Yinhang Zheng, Lutan Zhao, Kunpeng Wang, and Rui Hou. 2024. "Faster NTRU-Based Bootstrapping in Less Than 4 Ms." IACR Transactions on Cryptographic Hardware and Embedded Systems 2024 (3): 418-51.

Liu, Zeyu, Daniele Micciancio, and Yuriy Polyakov. 2022. "Large-Precision Homomorphic Sign Evaluation Using FHEW/TFHE Bootstrapping." In International Conference on the Theory and Application of Cryptology and Information Security, 130-60. Springer.

Lyubashevsky, Vadim, Chris Peikert, and Oded Regev. 2010. "On Ideal Lattices and Learning with Errors over Rings." In EUROCRYPT 2010. Springer. https://doi.org/10.1007/978-3-642-13190-5\_1.

Micciancio, Daniele, and Oded Regev. 2009. "Lattice-Based Cryptography." In Post-Quantum Cryptography, 147-91. Springer.

Regev, Oded. 2005. "On Lattices, Learning with Errors, Random Linear Codes, and Cryptography." In STOC 2005. ACM. https://doi.org/10.1145/1060590.1060603.

Stehlé, Damien, Ron Steinfeld, Keisuke Tanaka, and Keita Xagawa. 2009. "Efficient Public Key Encryption Based on Ideal Lattices." In ASIACRYPT 2009. Springer. https://doi.org/10.1007/978-3-642-10366-7\_36.

Zhou, Tanping, Xiaoyuan Yang, Longfei Liu, Wei Zhang, and Ningbo Li. 2018. "Faster Bootstrapping with Multiple Addends." IEEE Access 6: 49868-76.

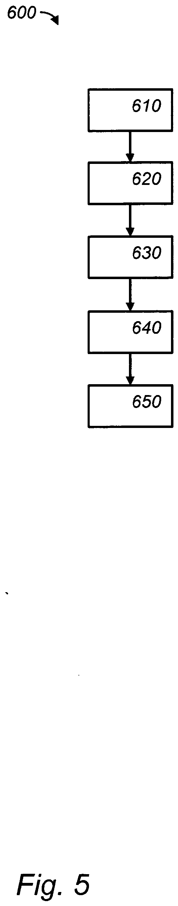

Figure 5 schematically shows an example of an embodiment of a method 600 for computing a blind rotation.

Method 600 is a computer-implemented, cryptographic method for computing a blind rotation modulo a cyclotomic polynomial $\Phi_\alpha$ in a fully homomorphic computation scheme. Method 600 comprises

- obtaining (610)

  - a target polynomial to be rotated ($CT_{\textbf{BR}} \leftarrow LUT_f \cdot X^{\bar{b}}$)
  - a sequence of integers ($a_0, \cdots, a_{n-1}$), wherein the target polynomial is to be rotated over a dot product of the sequence and a secret key ($\vec{s} = [s_0 \cdots s_{n-1}]$)

  - a set of bootstrapping keys $\left(BSK_i \in GGSW_{\vec{s}}^{\beta,\ell}(s_i) \subseteq \Re_{q,\Phi_\alpha}^{(k+1)\ell \times (k+1)}\right)$, encrypting digits of the secret key as encrypted values,

- partitioning (620) the sequence of integers ($a_i$) into values zero modulo an integer $\mu$, and values non-zero modulo $\mu$,
- processing (630) the blind rotation for a part of the partition corresponding to the values non-zero modulo $\mu$, wherein the processing updates the target polynomial for each value in the part, using the bootstrapping keys in the set of bootstrapping keys corresponding to the values in the part,
- splitting (640) the target polynomial into multiple part polynomials having monomials with exponent zero modulo the integer $\mu$, and exponent non-zero modulo $\mu$,
- processing (650) the blind rotation for parts of the partition corresponding to the values zero modulo $\mu$, wherein the processing iteratively updates the multiple part polynomials, skipping the part polynomials corresponding to monomials having exponents in non-zero equivalency classes, for each value in the part, using the bootstrapping keys in the set of bootstrapping keys corresponding to the values in the part.

Many different ways of executing the method are possible, as will be apparent to a person skilled in the art. For example, the steps can be performed in the shown order, but the order of the steps can be varied, or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing one or more computers, e.g., a processor system, to perform an embodiment of method 600. The software may include only those steps taken by a particular sub-entity of the system. The software and/or other data according to an embodiment may be stored in a non-transitory storage medium, such as a hard disk, a floppy disk, a memory, an optical disc, read-only memory, random access memory, CD-ROMs, magnetic tape, optical data storage devices, etc. Transitory signals and carrier waves are excluded from non-transitory media.

The software may be sent as a transitory signal along a wire or wirelessly, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, code intermediate between source and object code, such as partially compiled code, or in any other form suitable for use in the implementation of an embodiment of the method. An embodiment relating to a computer program product comprises computer-executable instructions corresponding to each of the processing steps of at least one of the methods set forth. These instructions may be subdivided into subroutines and/or be stored in one or more files that may be linked statically or dynamically. Another embodiment relating to a computer program product comprises computer-executable instructions corresponding to each of the devices, units, and/or parts of at least one of the systems and/or products set forth.

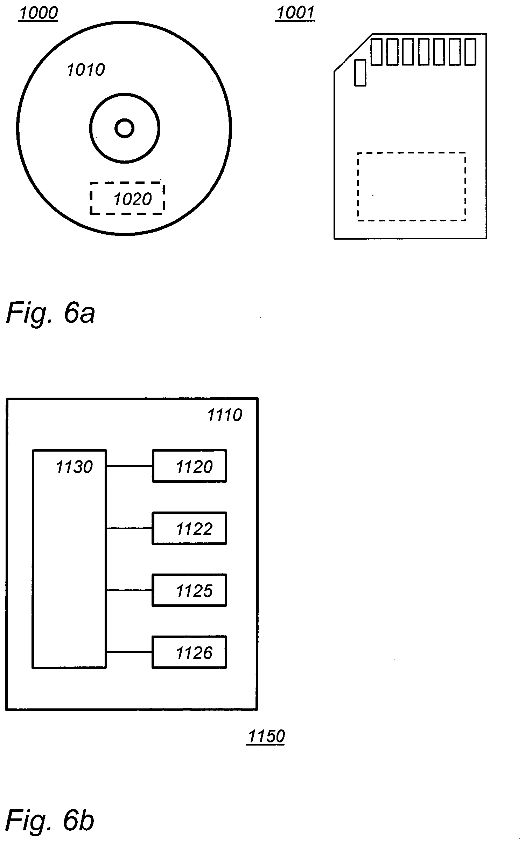

**Figure 6a** shows a computer-readable medium 1000 having a writable part 1010, and a computer-readable medium 1001 also having a writable part. Computer-readable medium 1000 is shown in the form of an optically readable medium. Computer-readable medium 1001 is shown in the form of an electronic memory, in this case a memory card. Computer-readable mediums 1000 and 1001 may store data 1020 wherein the data may indicate instructions which, when executed by a processor system, cause a processor system to perform an embodiment of a blind rotation method according to an embodiment. The computer program 1020 may be embodied on the computer-readable medium 1000 as physical marks or by magnetization of the computer-readable medium 1000. However, any other suitable embodiment is conceivable as well. Furthermore, it will be appreciated that, although the computer-readable medium 1000 is shown here as an optical disc, the computer-readable medium 1000 may be any suitable computer-readable medium, such as a hard disk, solid-state memory, flash memory, etc., and may be non-recordable or recordable. The computer program 1020 comprises instructions for causing a processor system to perform an embodiment of said blind rotation method.

**Figure 6b** shows a schematic representation of a processor system 1140 according to an embodiment. The processor system comprises one or more integrated circuits 1110. The architecture of the one or more integrated circuits 1110 is schematically shown in Figure 6b. Integrated circuits 1110 comprises a processing unit 1120, e.g., a processor, a CPU, for running computer program components to execute a method according to an embodiment and/or implement its modules or units. Integrated circuits 1110 comprises a memory 1122 for storing programming code, data, etc. Part of memory 1122 may be read-only. Integrated circuits 1110 may comprise a communication element 1126, e.g., an antenna, connectors, or both, and the like. Integrated circuits 1110 may comprise a dedicated integrated circuit 1124 for performing part or all of the processing defined in the method. Processing unit 1120, memory 1122, dedicated IC 1124 and communication element 1126 may be connected to each other via an interconnect 1130, such as a bus. The processor system 1140 may be arranged for contact and/or contactless communication, using an antenna and/or connectors, respectively.

For example, in an embodiment, processor system 1140, e.g., a blind rotation device, such as a homomorphic computation device, may comprise a processor circuit and a memory circuit, the processor being arranged to execute software stored in the memory circuit. The memory circuit may be a ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processing unit 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A computer-implemented, cryptographic method (600) for computing a blind rotation modulo a cyclotomic polynomial $\Phi_\alpha$ in a fully homomorphic computation scheme, the method comprising

    - obtaining (610)

        - a target polynomial to be rotated ($CT_{BR} \leftarrow LUT_f \cdot X^{\vec{b}}$)
        - a sequence of integers ($a_0, \cdots, a_{n-1}$), wherein the target polynomial is to be rotated over a dot product of the sequence and a secret key ($\vec{s} = [s_0 \cdots s_{n-1}]$)

        - a set of bootstrapping keys ($BSK_i \in GGSW_{\vec{s}}^{\beta,\ell}(s_i) \subseteq \mathfrak{R}_{q,\Phi_\alpha}^{(k+1)\ell \times (k+1)}$), encrypting digits of the secret key as encrypted values,

- partitioning (620) the sequence of integers ($a_i$) into values zero modulo an integer $\mu$, and values non-zero modulo $\mu$,
- processing (630) the blind rotation for a part of the partition corresponding to the values non-zero modulo $\mu$, wherein the processing updates the target polynomial for each value in the part, using the bootstrapping keys in the set of bootstrapping keys corresponding to the values in the part,
- splitting (640) the target polynomial into multiple part polynomials having monomials with exponents zero modulo the integer $\mu$, and exponents non-zero modulo,
- processing (650) the blind rotation for parts of the partition corresponding to the values zero modulo $\mu$, wherein the processing updates the multiple part polynomials for each value in the part, skipping the part polynomials corresponding to monomials having exponents non-zero modulo $\mu$, using the bootstrapping keys in the set of bootstrapping keys corresponding to the values in the part.

2. The method of Claim 1, further comprising extracting a term of a part polynomial corresponding to monomials having exponents in a zero equivalency class.

3. The method of any one of the preceding claims, wherein the splitting comprises splitting the target polynomial into multiple part polynomials, wherein each part polynomial of the multiple part polynomials comprises monomials of the target polynomial having exponents in a same equivalency class modulo a power of $\mu$ (e.g., $\mu$, e.g., $\mu^2$).

4. A computer-implemented, cryptographic method for bootstrapping or programmable bootstrapping of a homomorphically encrypted value comprising a blind rotation of a test polynomial, wherein the blind rotation comprises the method of Claim 3.

5. A method as in Claim 4, comprising

- obtaining an LWE-type encrypted value ($ct_m = (a_0, \cdots, a_{n-1}, b) \in LWE_{\vec{s}} \subseteq \mathbb{Z}_q^{n+1}$), and a GLWE-type encrypted test polynomial ($LUT_f \in GLWE_{\vec{S}_{ext}} \subseteq \mathfrak{R}_{q,\Phi_{\alpha\eta}}^{(k+1)\ell \times (k+1)}$), the test polynomial representing a function,
- modulo switching the encrypted value, obtaining as a mask the sequence of integers, and a body, wherein the sequence of integers is obtained by multiplying the test polynomial with a unit monomial having the body in the exponent.

6. The method according to any one of the preceding claims, wherein the modulo switching comprises for each coefficient of the encrypted value, multiplying it by a modulo switching quotient and performing a rounding operation, for at least part of the coefficients the rounding operation comprises determining if rounding up or rounding down would produce a multiple of $\mu$, and, if so, rounding up or rounding down respectively.

7. The method according to any one of the preceding claims, wherein the prime factors of the integer $\mu$ are a prime factor of $\alpha$.

8. The method according to any one of the preceding claims, wherein the partitioning of the sequence of integers ($a_i$) into values zero modulo an integer $\mu$, further comprises partitioning into sets according to a divisibility level of an integer in the sequence, wherein a divisibility level of an integer is the largest exponent of $\mu$ that divides the integer, with an upper bound on the divisibility level defined by a parameter $\xi$.

9. The method according to Claim 8, wherein each part polynomial of the multiple part polynomials comprises monomials of the target polynomial having exponents in a same equivalency class $\mu$ to the power of the parameter $\xi$.

10. The method according to any one of the preceding claims, wherein processing the blind rotation comprises performing a conditional update of a part polynomial based on a corresponding bit of the secret key, wherein if the bit is 0, the part polynomial remains unchanged, and if the bit is 1, the part polynomial is multiplied with a unit monomial with an exponent corresponding to a corresponding one of the sequence of integers.

11. The method according to Claim 10, wherein the conditional update comprises a homomorphic multiplexor gate.

12. The method according to any one of the preceding claims, wherein the integer $\mu$ equals 2, and $\alpha$ is a power of 2.

13. The method according to any one of the preceding claims, wherein processing the blind rotation for the multiple part polynomials is at least partly in parallel.

14. A method for performing a computation using fully homomorphic encryption (FHE) cryptography, the computation comprising a set of FHE operations implementing the computation and operating on encrypted data items, the method comprising:

(a) receiving one or more encrypted data items for the computation from a data-provider device, the one or more encrypted data items being encrypted with an encryption key of the data-provider device,
(b) performing the set of FHE operations on encrypted data items including the received encrypted data items, obtaining one or more FHE encrypted result data items, the performing comprising a method according to any one of the preceding claims,
(c) storing the one or more FHE encrypted result data items for later FHE processing, and/or transmitting the one or more FHE encrypted result data items for further FHE processing on a further device

15. The method as in any one of the preceding claims, comprising evaluating a neural network on one or more FHE encrypted data items, obtaining one or more FHE encrypted result data items, e.g., wherein the FHE encrypted data items represent an image, a video, or an audio fragment, e.g., wherein the neural network is an image, video, or audio classifier, or an image, video, or audio generator.

16. The method as in any one of the preceding claims, comprising evaluating a smart contract,

- obtaining a homomorphically encrypted value,
- homomorphically evaluating the smart contract, including applying a homomorphic computation at least to the retrieved homomorphically encrypted value.

17. A system configured for computing a blind rotation modulo a cyclotomic polynomial in a fully homomorphic computation scheme comprising: one or more processors; and one or more storage devices storing instructions that, when executed by the one or more processors, cause the one or more processors to perform operations for any one of the preceding claims.

18. A transitory or non-transitory computer readable medium encoded with instructions that, when executed by one or more computers, cause the one or more computers to perform the method according to any one of Claims 1-16.

Fig. 1a

Fig. 1b

200

261

260 →→→→→→→→→→ 270

271

211

216

210

215

221
222
223
220

250

231
232
233
234
230

251 ← 255

Fig. 2

300

301    305    307    309    311

303 ——— 302    306    308    310    312
304 ———

## Fig. 3

500

501    514    519    522    525

503 ——— 502    515    520    523    526
504 ———

506 ——— 505    516
507 ———

509 ——— 508    517    521    524
510 ———

512 ——— 511    518
513 ———

530    540    550

## Fig. 4

*600* ⬊

```
┌─────────────┐
│     610     │
└─────────────┘
       │
       ▼
┌─────────────┐
│     620     │
└─────────────┘
       │
       ▼
┌─────────────┐
│     630     │
└─────────────┘
       │
       ▼
┌─────────────┐
│     640     │
└─────────────┘
       │
       ▼
┌─────────────┐
│     650     │
└─────────────┘
```

*Fig. 5*

Fig. 6a

Fig. 6b

## EUROPEAN SEARCH REPORT

**Application Number**

EP 25 31 5008

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/171085 A1 (LEE YONGWOO [KR] ET AL) 1 June 2023 (2023-06-01) * paragraphs [0160] - [0167]; figure 7 * ----- | 1-18 | INV. H04L9/00 H04L9/30 |

**TECHNICAL FIELDS SEARCHED (IPC)**

H04L

The present search report has been drawn up for all claims

| Place of search | Date of completion of the search | Examiner |
|---|---|---|
| Munich | 17 June 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 31 5008

This annex lists the patent family members relating to the patent documents cited in  the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | Publication date |
|---|---|---|---|
| US 2023171085  A1 | 01-06-2023 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. CHILLOTTI et al.** *Programmable Bootstrapping Enables Efficient Homomorphic Inference of Deep Neural Networks*, https://doi.org/10.1007/978-3-030-78086-9_1
- Faster Bootstrapping with Polynomial Error.. **ALPERIN-SHERIFF** ; **JACOB** ; **CHRIS PEIKERT**. In Advances in Cryptology-CRYPTO 2014: 34th Annual Cryptology Conference. Springer, 2014, 297-314
- **BERGERAT, LORIS** ; **ANAS BOUDI** ; **QUENTIN BOURGERIE** ; **ILARIA CHILLOTTI** ; **DAMIEN LIGIER** ; **JEAN-BAPTISTE ORFILA** ; **SAMUEL TAP.** Parameter Optimization & Larger Precision for (T)FHE.. *IACR Cryptol. ePrint Arch*, 2022, vol. 704, https://eprint.iacr.org/2022/704
- **BERGERAT, LORIS** ; **ILARIA CHILLOTTI** ; **DAMIEN LIGIER** ; **JEAN-BAPTISTE ORFILA** ; **ADELINE ROUX-LANGLOIS** ; **SAMUEL TAP**. Faster Secret Keys for (t) FHE.. *Cryptology ePrint Archive*, 2023
- Final: Faster Fhe Instantiated with Ntru and Lwe. **BONTE, CHARLOTTE** ; **ILIA ILIASHENKO** ; **JEON-GEUN PARK** ; **HILDER VL PEREIRA** ; **NIGEL P SMART**. In International Conference on the Theory and Application of Cryptology and Information Security. Springer, 2022, 188-215
- Fast Homomorphic Evaluation of Deep Discretized Neural Networks. **BOURSE, FLORIAN** ; **MICHELE MINELLI** ; **MATTHIAS MINIHOLD** ; **PASCAL PAILLIER.** In Advances in Cryptology-CRYPTO 2018: 38th Annual International Cryptology Conference, Santa Barbara, CA, USA. Springer, 2018, 483-512
- **BRAKERSKI, ZVIKA.** Fully Homomorphic Encryption Without Modulus Switching from Classical GapSVP. *IACR Cryptology ePrint Archive*, 2012, vol. 2012 (78), http://eprint.iacr.org/2012/078
- **BRAKERSKI, ZVIKA** ; **CRAIG GENTRY** ; **VINOD VAIKUNTANATHAN**. Leveled) Fully Homomorphic Encryption Without Bootstrapping. *In Innovations in Theoretical Computer Science 2012*, 08 January 2012, 309-25, http://doi.acm.org/10.1145/2090236.2090262
- New Techniques for Multi-Value Input Homomorphic Evaluation and Applications. **CARPOV, SERGIU** ; **MALIKA IZABACHÈNE** ; **VICTOR MOLLIMARD**. In Cryptographers' Track at the RSA Conference. Springer, 2019, 106-26

- **CHECRI, MARINA** ; **RENAUD SIRDEY** ; **AYMEN BOUDGUIGA** ; **JEAN-PAUL BULTEL**. On the Practical CPAD Security of 'Exact' and Threshold FHE Schemes and Libraries. *Cryptology ePrint Archive*, 2024
- **CHEON** ; **JUNG HEE** ; **HYEONGMIN CHOE** ; **ALAIN PASSELÈGUE** ; **DAMIEN STEHLÉ** ; **ELIAS SUVANTO**. Attacks Against the INDCPA-d Security of Exact FHE Schemes. *Cryptology ePrint Archive*, 2024
- **CHEON** ; **JUNG HEE** ; **ANDREY KIM** ; **MIRAN KIM** ; **YONG SOO SONG**. Homomorphic Encryption for Arithmetic of Approximate Numbers. *In Advances in Cryptology - ASIACRYPT 2017 - 23rd International Conference on the Theory and Applications of Cryptology and Information Security*, 03 December 2017, 409-37, https://doi.org/10.1007/978-3-319-70694-8_15
- **CHILLOTTI, ILARIA** ; **NICOLAS GAMA** ; **MARIYA GEORGIEVA** ; **MALIKA IZABACHÈNE**. Faster Fully Homomorphic Encryption: Bootstrapping in Less Than 0.1 Seconds. *In Advances in Cryptology - ASIACRYPT 2016 - 22nd International Conference on the Theory and Application of Cryptology and Information Security*, 04 December 2016, 3-33, https://doi.org/10.1007/978-3-662-53887-6_1
- Faster Packed Homomorphic Operations and Efficient Circuit Bootstrapping for TFHE. *In Advances in Cryptology - ASIACRYPT 2017 - 23rd International Conference on the Theory and Applications of Cryptology and Information Security*, 03 December 2017, 377-408, https://doi.org/10.1007/978-3-319-70694-8_14
- TFHE: Fast Fully Homomorphic Encryption over the Torus. *Journal of Cryptology*, 2020, vol. 33 (1), 34-91
- **CHILLOTTI, ILARIA** ; **MARC JOYE** ; **DAMIEN LIGIER** ; **JEAN-BAPTISTE ORFILA** ; **SAMUEL TAP**. CONCRETE: Concrete Operates on Ciphertexts Rapidly by Extending TfhE. *In WAHC 2020*, 2020
- Programmable Bootstrapping Enables Efficient Homomorphic Inference of Deep Neural Networks. **CHILLOTTI, ILARIA** ; **MARC JOYE** ; **PASCAL PAILLIER.** In CSCML 2021. Springer, 2021

- Improved Programmable Bootstrapping with Larger Precision and Efficient Arithmetic Circuits for Tfhe.. **CHILLOTTI, ILARIA** ; **DAMIEN LIGIER** ; **JEAN-BAPTISTE ORFILA** ; **SAMUEL TAP**. In International Conference on the Theory and Application of Cryptology and Information Security. Springer, 2021, 670-99
- **CONRAD, KEITH**. Cyclotomic Extensions. *Preprint*, 2015
- **DUCAS, LÉO** ; **DANIELE MICCIANCIO**. FHEW: Bootstrapping Homomorphic Encryption in Less Than a Second. *In Advances in Cryptology - EUROCRYPT 2015 - 34th Annual International Conference on the Theory and Applications of Cryptographic Techniques*, 26 April 2015, 617-40, https://doi.org/10.1007/978-3-662-46800-5_24
- *FHEW: A Fully Homomorphic Encryption Library*, 2017, https://github.com/lducas/FHEW
- **FAN, JUNFENG** ; **FREDERIK VERCAUTEREN**. Somewhat Practical Fully Homomorphic Encryption.. *IACR Cryptology ePrint Archive 2012*, 2012, 144, http://eprint.iacr.org/2012/144
- Structural Lattice Reduction: Generalized Worst-Case to Average-Case Reductions and Homomorphic Cryptosystems. **GAMA, NICOLAS** ; **MALIKA IZABACHENE** ; **PHONG Q NGUYEN** ; **XIANG XIE.** In Advances in Cryptology-EUROCRYPT 2016: 35th Annual International Conference on the Theory and Applications of Cryptographic Techniques. Springer, 08 May 2016, 528-58
- **GENTRY, CRAIG**. Fully Homomorphic Encryption Using Ideal Lattices. *In Proceedings of the 41st Annual ACM Symposium on Theory of Computing, STOC 2009*, 2009, 169-78, http://doi.acm.org/10.1145/1536414.1536440
- Homomorphic Evaluation of the AES Circuit.. **GENTRY, CRAIG** ; **SHAI HALEVI** ; **NIGEL P SMART**. In Annual Cryptology Conference. Springer, 2012, 850-67
- **GENTRY, CRAIG** ; **AMIT SAHAI** ; **BRENT WATERS**. Homomorphic Encryption from Learning with Errors: Conceptually-Simpler, Asymptotically-Faster, Attribute-Based. *IACR Cryptology ePrint Archive*, 2013, vol. 2013 (340), http://eprint.iacr.org/20 13/340
- **GUIMARÃES, ANTONIO** ; **EDSON BORIN** ; **DIEGO F ARANHA**. Revisiting the Functional Bootstrap in TFHE. *IACR Transactions on Cryptographic Hardware and Embedded Systems*, 2021, 229-53
- NTRU: A Ring-Based Public Key Cryptosystem. **HOFFSTEIN, JEFFREY** ; **JILL PIPHER** ; **JOSEPH H SILVERMAN**. In Algorithmic Number Theory: Third International Symposiun. Springer, 21 June 1998, 267-88
- **HONG, DEOKHWA** ; **YOUNG-SIK KIM** ; **YONG-WOO LEE** ; **EUNYOUNG SEO**. A New Fine Tuning Method for FHEW/TFHE Bootstrapping with IND-CPAD Security.. *Cryptology ePrint Archive*, 2024
- Blind Rotation in Fully Homomorphic Encryption with Extended Keys. **JOYE, MARC** ; **PASCAL PAILLIER.** In International Symposium on Cyber Security, Cryptology, and Machine Learning. Springer, 2022, 1-18
- **JOYE, MARC** ; **MICHAEL WALTER**. Liberating TFHE: Programmable Bootstrapping with General Quotient Polynomials. *In Proceedings of the 10th Workshop on Encrypted Computing & Applied Homomorphic Cryptography*, 2022, 1-11
- **LANGLOIS, ADELINE** ; **DAMIEN STEHLÉ**. Worst-Case to Average-Case Reductions for Module Lattices.. *Designs, Codes and Cryptography*, 2015, vol. 75 (3), 565-99
- **LEE, CHANGMIN** ; **SEONHONG MIN** ; **JINYEONG SEO** ; **YONGSOO SONG**. Faster TFHE Bootstrapping with Block Binary Keys. *In Proceedings of the 2023 ACM Asia Conference on Computer and Communications Security*, 2023, 2-13
- Discretization Error Reduction for High Precision Torus Fully Homomorphic Encryption. **LEE** ; **KANG HOON** ; **JI WON YOON.** In IACR International Conference on Public-Key Cryptography. Springer, 2023, 33-62
- Efficient FHEW Bootstrapping with Small Evaluation Keys, and Applications to Threshold Homomorphic Encryption.. **LEE, YONGWOO** ; **DANIELE MICCIANCIO** ; **ANDREY KIM** ; **RAKYONG CHOI** ; **MAXIM DERYABIN** ; **JIEUN EOM** ; **DONGHOON YOO.** In Annual International Conference on the Theory and Applications of Cryptographic Techniques. Springer, 2023, 227-56
- On the Security of Homomorphic Encryption on Approximate Numbers.. **LI, BAIYU** ; **DANIELE MICCIANCIO**. In Annual International Conference on the Theory and Applications of Cryptographic Techniques. Springer, 2021, 648-77
- **LI, ZHIHAO** ; **XIANHUI LU** ; **ZHIWEI WANG** ; **RUIDA WANG** ; **YING LIU** ; **YINHANG ZHENG** ; **LUTAN ZHAO** ; **KUNPENG WANG** ; **RUI HOU**. Faster NTRU-Based Bootstrapping in Less Than 4 Ms. *IACR Transactions on Cryptographic Hardware and Embedded Systems*, 2024, vol. 2024 (3), 418-51
- Large-Precision Homomorphic Sign Evaluation Using FHEW/TFHE Bootstrapping. **LIU, ZEYU** ; **DANIELE MICCIANCIO** ; **YURIY POLYAKOV.** In International Conference on the Theory and Application of Cryptology and Information Security. Springer, 2022, 130-60
- On Ideal Lattices and Learning with Errors over Rings. **LYUBASHEVSKY, VADIM** ; **CHRIS PEIKERT** ; **ODED REGEV**. In EUROCRYPT 2010. Springer, 2010

- Lattice-Based Cryptography. **MICCIANCIO, DANIELE** ; **ODED REGEV.** In Post-Quantum Cryptography. Springer, 2009, 147-91
- **REGEV, ODED**. On Lattices, Learning with Errors, Random Linear Codes, and Cryptography. *In STOC 2005. ACM*, 2005, https://doi.org/10.1145/1060590.1060603
- Efficient Public Key Encryption Based on Ideal Lattices.. **STEHLÉ, DAMIEN** ; **RON STEINFELD** ; **KEISUKE TANAKA** ; **KEITA XAGAWA**. In ASIACRYPT 2009. Springer, 2009
- **ZHOU, TANPING** ; **XIAOYUAN YANG** ; **LONGFEI LIU** ; **WEI ZHANG** ; **NINGBO LI**. Faster Bootstrapping with Multiple Addends.. *IEEE Access*, 2018, vol. 6, 49868-76